(19) Europäisches Patentamt
European Patent Office
Office européen des brevets

(11) **EP 4 459 236 B1**

(12) **EUROPEAN PATENT SPECIFICATION**

(45) Date of publication and mention
of the grant of the patent:
**08.04.2026 Bulletin 2026/15**

(21) Application number: **22915692.2**

(22) Date of filing: **12.12.2022**

(51) International Patent Classification (IPC):
***G01D 5/347*** *(2006.01)*

(52) Cooperative Patent Classification (CPC):
**G01D 5/34715; G01D 5/24476; G01D 5/3473;
G01P 3/486**

(86) International application number:
**PCT/JP2022/045603**

(87) International publication number:
**WO 2023/127468 (06.07.2023 Gazette 2023/27)**

(54) **ENCODER AND ATTACHMENT METHOD**

CODIERER UND BEFESTIGUNGSVERFAHREN

CODEUR ET PROCÉDÉ DE MONTAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.12.2021 JP 2021212447**

(43) Date of publication of application:
**06.11.2024 Bulletin 2024/45**

(73) Proprietor: **Panasonic Intellectual Property
Management Co., Ltd.
Kadoma-shi, Osaka 571-0057 (JP)**

(72) Inventors:
• **MURAKAMI, Kimihiro
Kadoma-shi, Osaka 571-0057 (JP)**
• **SHIRAISHI, Masaru
Kadoma-shi, Osaka 571-0057 (JP)**

(74) Representative: **Novagraaf International SA
Chemin de l'Echo 3
1213 Onex, Geneva (CH)**

(56) References cited:
JP-A- 2010 145 333    JP-A- 2010 210 316
JP-A- 2010 210 316    JP-A- 2011 220 805
JP-A- 2011 220 805    US-A1- 2012 206 024
US-A1- 2021 010 807

## EP 4 459 236 B1

**Description**

[Technical Field]

The present disclosure relates to an encoder and an attachment method.

[Background Art]

Conventional encoders that detect rotation of a detection target, such as a motor shaft, are known. For example, such encoders include components such as a rotary plate that rotates with the detection target and a member for detecting the eccentricity of the rotary plate relative to the detection target. For example,
**[0003]** Patent Literature (PTL) 1 discloses an angular velocity detection device. In the angular velocity detection device, sensor members are disposed facing each other across the rotation center of the shaft. Information on the angular velocity obtained from the sensor members is input to a control device to perform arithmetic processing so as to remove an error component in the attachment position of the disk and obtain only the true rotational angular velocity component, and cause a drive motor for the photoconductor drums to output drive pulses that prevent rotational fluctuations.

[Citation List]

[Patent Literature]

[PTL 1] Japanese Unexamined Patent Application Publication No. H07-140844

[Summary of Invention]

[Technical Problem]

The angular velocity detection device according to PTL 1, however, is not capable of precisely detecting the eccentricity of the rotary plate relative to the detection target. US 2012/206024 A1 shows a further known optical encoder.
The present disclosure has been conceived in view of the above circumstances, and aims to provide an encoder etc. capable of precisely detecting the eccentricity of a rotary plate relative to a detection target.

[Solution to Problem]

The present invention provides an encoder as set out in claim 1 and an attachment method of attaching an encoder as set out in claim 15. Optional features are defined by the dependent claims.

[Advantageous Effects of Invention]

According to the present disclosure, it is possible to provide, for example, an encoder capable of precisely detecting the eccentricity of a rotary plate relative to a detection target.

[Brief Description of Drawings]

[FIG. 1]

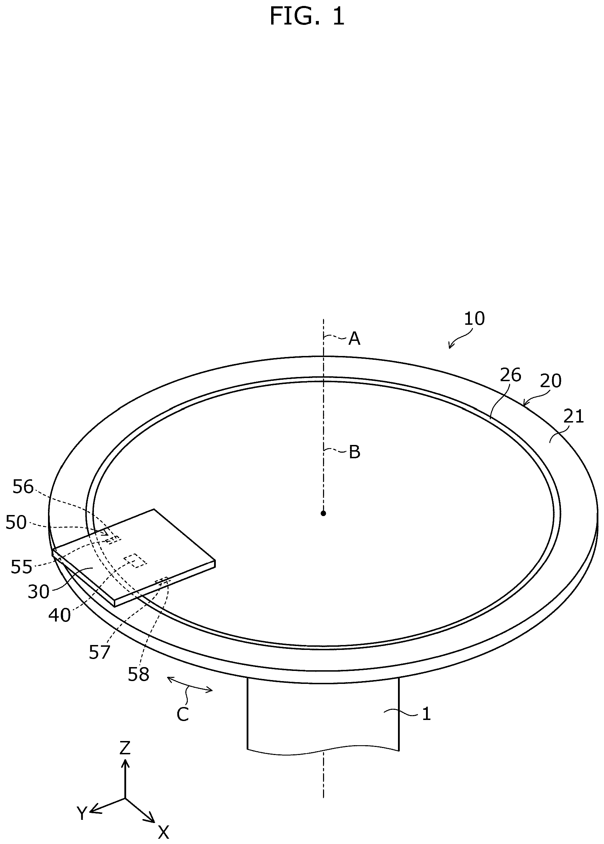

FIG. 1 is a perspective view illustrating an encoder according to Embodiment 1.
[FIG. 2]

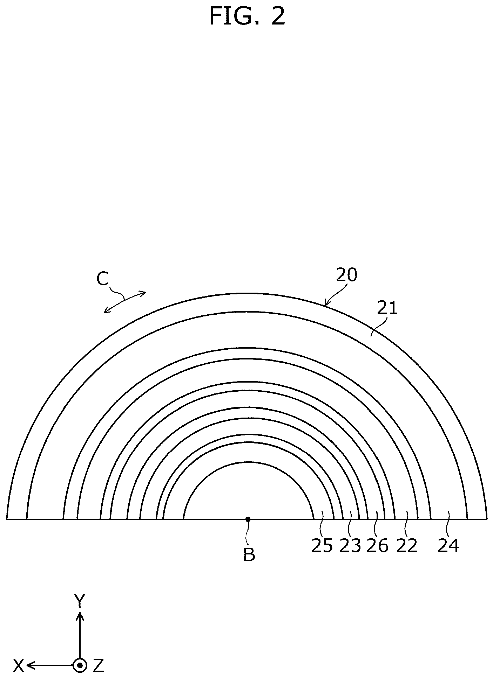

FIG. 2 is a schematic diagram of a rotary plate of the encoder in FIG. 1 as viewed in the axis direction.
[FIG. 3]

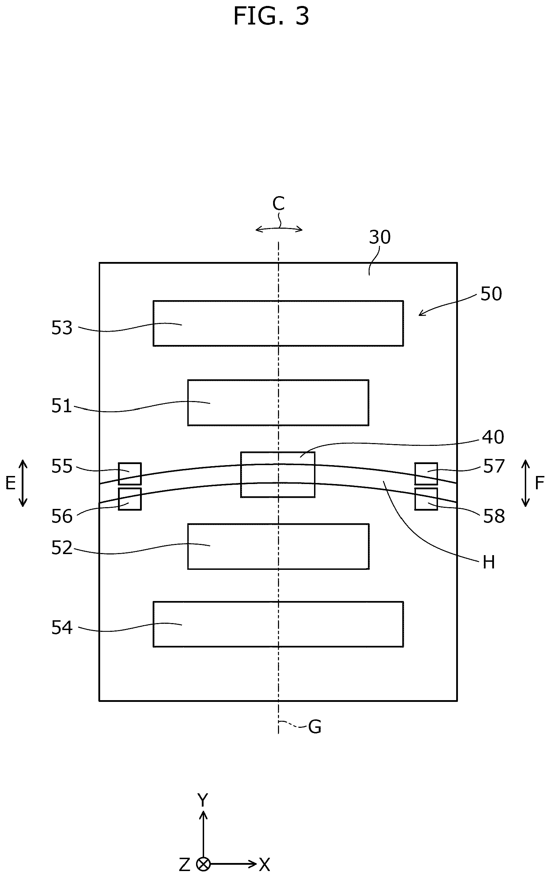

FIG. 3 is a schematic diagram of an emitter and a light receiver of the encoder in FIG. 1 as viewed in the axis direction.
[FIG. 4]

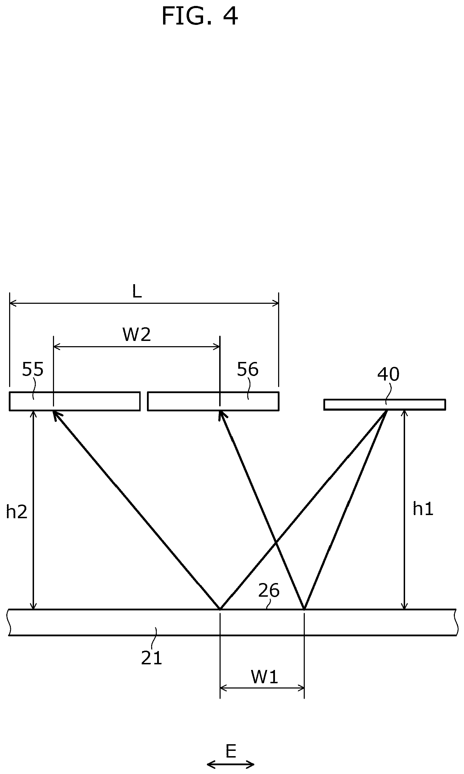

FIG. 4 is an explanatory diagram for describing a relationship between the dimensions of a first light-receiving region and a second light-receiving region and the dimensions of light that irradiates the first light-receiving region and the second light-receiving region in the encoder in FIG. 1.
[FIG. 5]

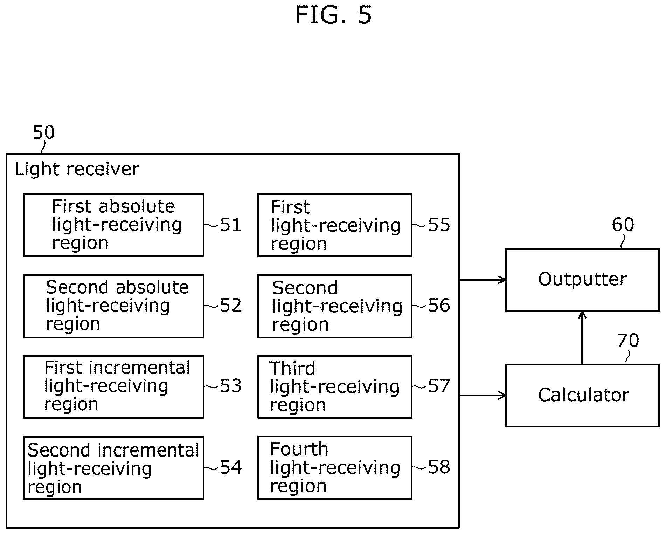

FIG. 5 is a block diagram illustrating a functional configuration of the encoder in FIG. 1.

[FIG. 6]

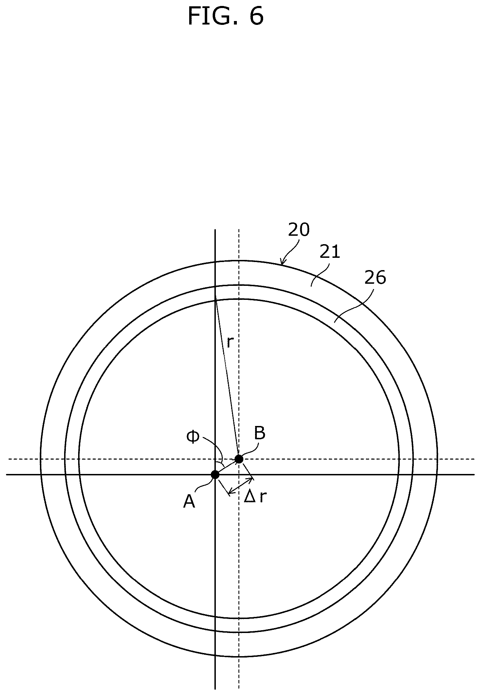

FIG. 6 is a schematic diagram illustrating an example of a state in which the axis of an annular region is eccentric relative to the rotation axis.

[FIG. 7]

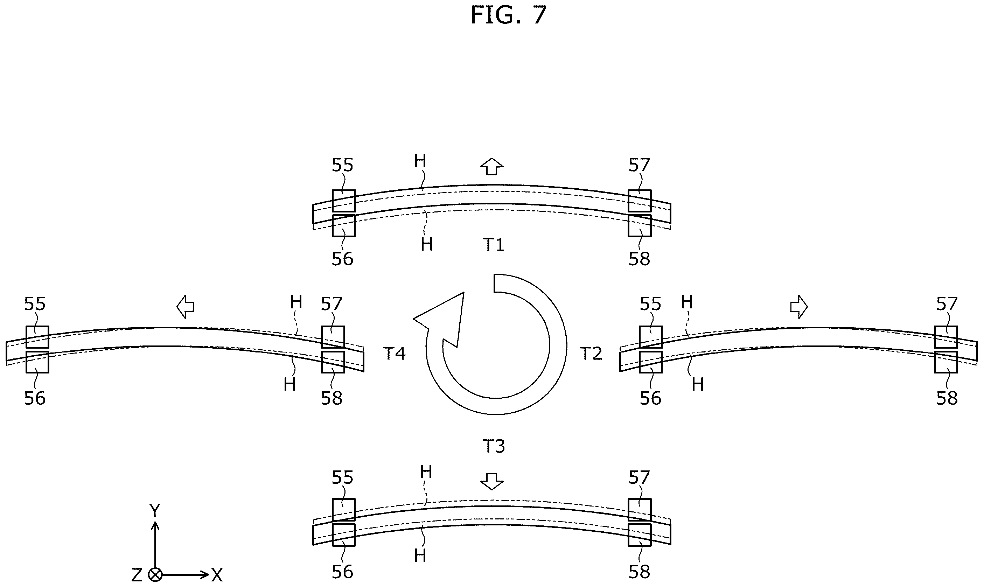

FIG. 7 is a schematic diagram illustrating an example of changes in position of light that irradiates the first light-receiving region, the second light-receiving region, a third light-receiving region, and a fourth light-receiving region, caused by rotation of the rotary plate in the state in which the axis of the annular region is eccentric relative to the rotation axis.

[FIG. 8]

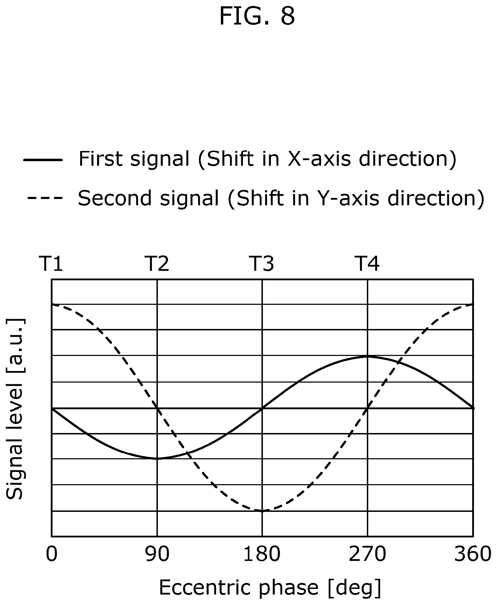

FIG. 8 is a graph illustrating an example of signals output by an outputter when the rotary plate rotates in the state in which the axis of the annular region is eccentric relative to the rotation axis.

[FIG. 9]

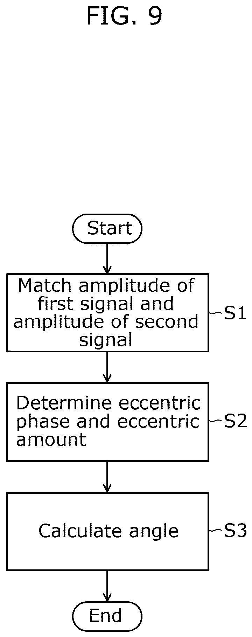

FIG. 9 is a flow chart illustrating an example of a calculation method performed by a calculator of the encoder in FIG. 1.

[FIG. 10]

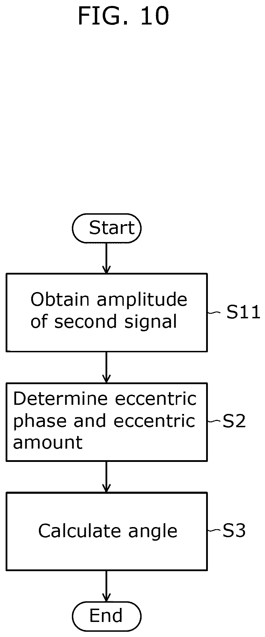

FIG. 10 is a flow chart illustrating another example of a calculation method performed by the calculator of the encoder in FIG. 1.

[FIG. 11]

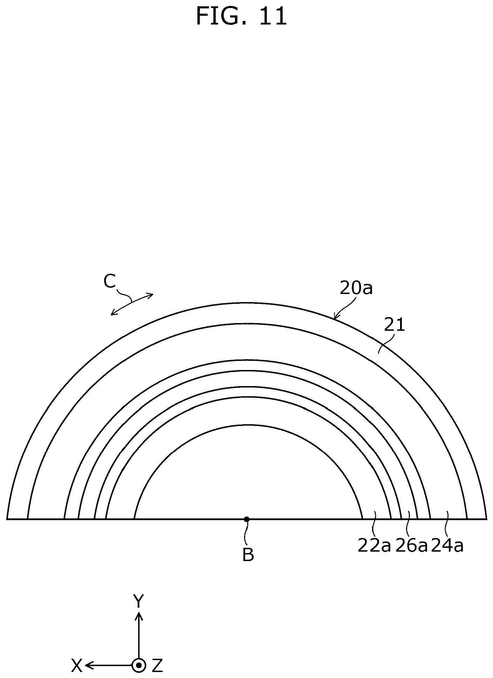

FIG. 11 is a schematic diagram of a rotary plate of an encoder according to Embodiment 2 as viewed in the axis direction.

[FIG. 12]

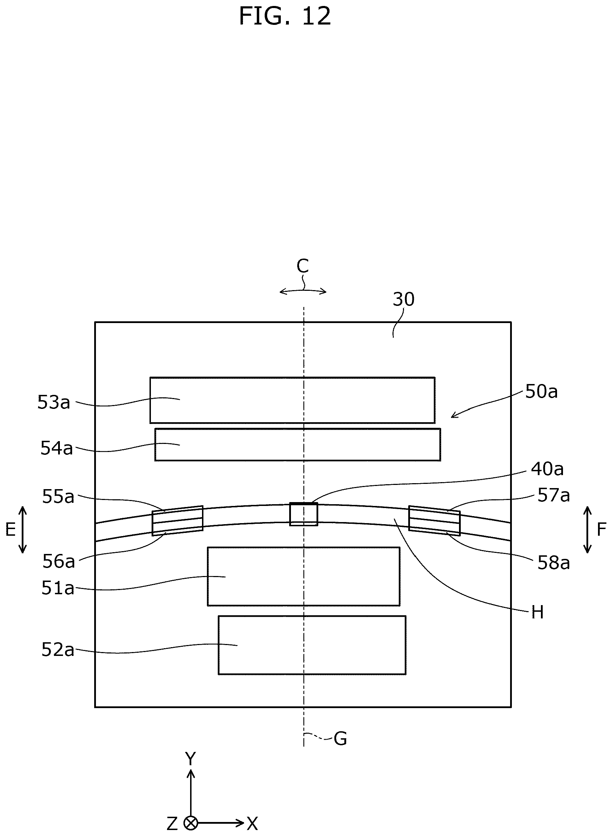

FIG. 12 is a schematic diagram of an emitter and a light receiver of the encoder in FIG. 11 as viewed in the axis direction.

[FIG. 13]

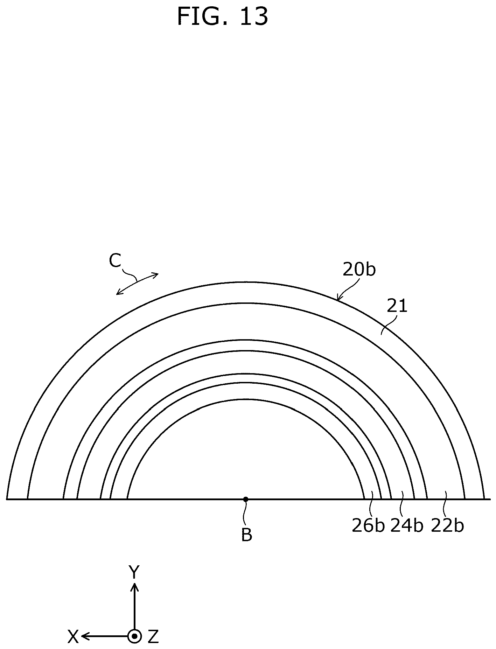

FIG. 13 is a schematic diagram of a rotary plate of an encoder according to Embodiment 3 as viewed in the axis direction.

[FIG. 14]

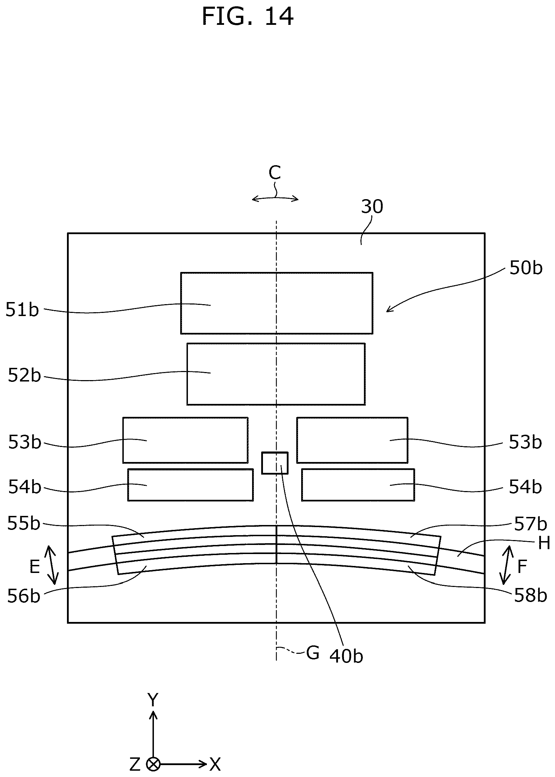

FIG. 14 is a schematic diagram of an emitter and a light receiver of the encoder in FIG. 13 as viewed in the axis direction.

[FIG. 15]

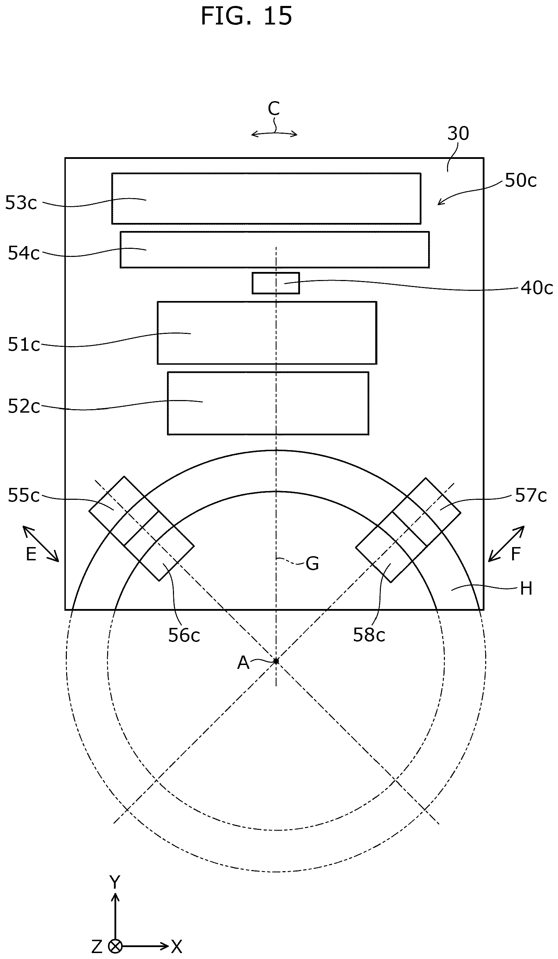

FIG. 15 is a schematic diagram of an emitter and a light receiver of an encoder according to Embodiment 4 as viewed in the axis direction.

[FIG. 16]

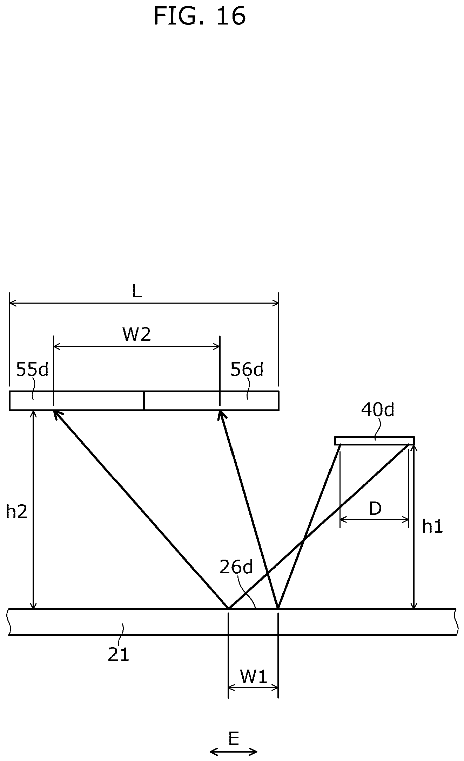

FIG. 16 is an explanatory diagram for describing a relationship between the dimensions of a first light-receiving region and a second light-receiving region and the dimensions of light that irradiates the first light-receiving region and the second light-receiving region in an encoder according to Embodiment 5.

[FIG. 17]

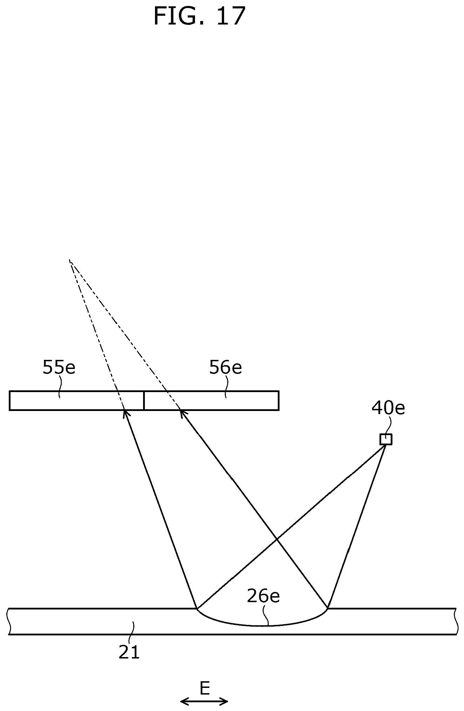

FIG. 17 is an explanatory diagram for describing a relationship between the dimensions of a first light-receiving region and a second light-receiving region and the dimensions of light that irradiates the first light-receiving region and the second light-receiving region in an encoder according to Embodiment 6.

[FIG. 18]

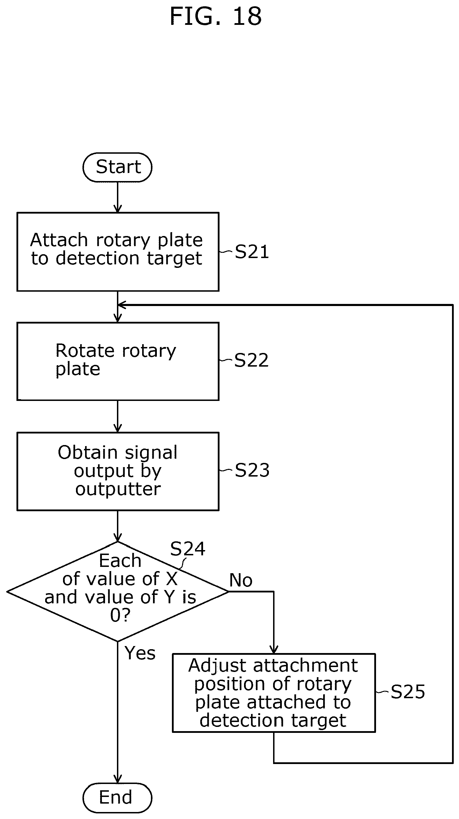

FIG. 18 is a flow chart illustrating an example of an attachment method according to Embodiment 7.

[Description of Embodiments]

Hereinafter, embodiments of the present disclosure will be described. Note that the embodiments described below each show one specific example of the present disclosure. Therefore, the numerical values, constituent elements, the arrangement and connection of the constituent elements, steps, the processing order of the steps etc. shown in the embodiments below are mere examples, and do not intend to limit the present disclosure. Accordingly, among the constituent elements in the embodiments below, those not recited in the independent claims will be described as optional constituent elements.

Also, the drawings are represented schematically and are not necessarily precise illustrations. Note that constituent elements that are substantially the same are given the same reference signs in the drawings, and redundant descriptions thereof will be omitted or simplified.

In the embodiments described below, terms indicating relative attitudes of two directions, such as "parallel" and "orthogonal", may be used. The meanings of such terms include attitudes that are not strictly the attitudes indicated by the terms. For example, when it is stated that two directions are orthogonal, it not only means that the two directions are completely orthogonal but also means that the two directions are substantially orthogonal unless otherwise specified. That is, it also means that differences of, for example, several percent are included.

[Embodiment 1]

FIG. 1 is a perspective view illustrating encoder 10 according to an embodiment. FIG. 2 is a schematic diagram of rotary plate 20 of encoder 10 in FIG. 1 as viewed in the axis direction. FIG. 3 is a schematic diagram of emitter 40 and light receiver 50 of encoder 10 in FIG. 1 as viewed in the axis direction. FIG. 4 is an explanatory diagram for describing a relationship between the dimensions of first light-receiving region 55 and second light-receiving region 56 and the dimensions of light that irradiates first light-receiving region 55 and second light-receiving region 56 in encoder 10 in FIG. 1. Encoder 10 will be described with reference to FIG. 1 through FIG. 4.

Note that FIG. 1 omits illustration of first absolute pattern 22, second absolute pattern 23, first incremental pattern 24, second incremental pattern 25, etc., to avoid complication of the drawing. Also, FIG. 2 illustrates only the half of rotary plate 20 to avoid complication of the drawing. In addition, in FIG. 4, emitter 40 and first and second light-receiving regions 55 and 56 are shifted in a first direction to avoid complication of the drawing. Also, the axis direction indicates the direction in which rotation axis A extends (the Z-axis direction in FIG. 1, for example).

As illustrated in FIG. 1, encoder 10 detects rotation of detection target 1. Specifically, encoder 10 detects, for example, the position (rotation position) of detection target 1, the rotation direction of detection target 1, the rotation amount of detection target 1, and/or the rotational speed of detection target 1. Detection target 1 rotates about rotation axis A. In the present embodiment, detection target 1 is the rotation shaft (the shaft) of a motor.

Encoder 10 includes rotary plate 20, substrate 30, emitter 40, and light receiver 50.

As illustrated in FIG. 1 and FIG. 2, rotary plate 20 rotates with detection target 1 about rotation axis A. Rotary plate 20 includes main body 21, first absolute pattern 22, second absolute pattern 23, first incremental pattern 24, second incremental pattern 25, and annular region 26. First absolute pattern 22, second absolute pattern 23, first incremental pattern 24, and second incremental pattern 25 are examples of one or more patterns for detecting the rotation angle of rotary plate 20 (detection target 1).

Main body 21 is in the shape of a plate whose thickness direction is in the axis direction, and is circular as viewed in the axis direction. Main body 21 is attached to one end portion of detection target 1 in the axis direction and rotates with detection target 1 about rotation axis A. The axis of main body 21 coincides with axis B of annular region 26.

First absolute pattern 22 is a pattern for detecting an absolute position of detection target 1. First absolute pattern 22 is provided on a main surface of main body 21 closer to emitter 40 and is annularly provided surrounding rotation axis A. The axis of first absolute pattern 22 coincides with axis B of annular region 26. For example, first absolute pattern 22 includes a reflective portion and a non-reflective portion that are arranged annularly. The reflective portion is a portion that reflects toward light receiver 50 light emitted from emitter 40, and the non-reflective portion is a portion that does not reflect toward light receiver 50 the light emitted from emitter 40.

Second absolute pattern 23 is a pattern for detecting an absolute position of detection target 1. Second absolute pattern 23 is provided on the main surface of main body 21 closer to emitter 40 and is annularly provided surrounding rotation axis A. The axis of second absolute pattern 23 coincides with axis B of annular region 26. Second absolute pattern 23 is provided inwardly of first absolute pattern 22 in the radial direction around axis B of annular region 26. For example, second absolute pattern 23 includes a reflective portion and a non-reflective portion that are arranged annularly. The reflective portion is a portion that reflects toward light receiver 50 light emitted from emitter 40, and the non-reflective portion is a portion that does not reflect toward light receiver 50 the light emitted from emitter 40.

First incremental pattern 24 is a pattern for detecting a relative position of detection target 1. First incremental pattern 24 is provided on the main surface of main body 21 closer to emitter 40 and is annularly provided surrounding rotation axis A. The axis of first incremental pattern 24 coincides with axis B of annular region 26. First incremental pattern 24 is provided outwardly of first absolute pattern 22 in the radial direction around axis B of annular region 26. For example, first incremental pattern 24 includes a reflective portion and a non-reflective portion that are arranged annularly. The reflective portion is a portion that reflects toward light receiver 50 light emitted from emitter 40, and the non-reflective portion is a portion that does not reflect toward light receiver 50 the light emitted from emitter 40.

Second incremental pattern 25 is a pattern for detecting a relative position of detection target 1. Second incremental pattern 25 is provided on the main surface of main body 21 closer to emitter 40 and is annularly provided surrounding rotation axis A. The axis of second incremental pattern 25 coincides with axis B of annular region 26. Second incremental pattern 25 is provided inwardly of second absolute pattern 23 in the radial direction around axis B of annular region 26. For example, second incremental pattern 25 includes a reflective portion and a non-reflective portion that are arranged annularly. The reflective portion is a portion that reflects toward light receiver 50 light emitted from emitter 40, and the non-reflective portion is a portion that does not reflect toward light receiver 50 the light emitted from emitter 40.

Note that, for example, each of one or more patterns for detecting a rotation angle of rotary plate 20 may transmit the light emitted from emitter 40.

Annular region 26 is a ring-shaped region that is provided surrounding rotation axis A and reflects light emitted from emitter 40. Annular region 26 reflects toward light receiver 50 the light emitted from emitter 40. Annular region 26 is provided on the main surface of main body 21 closer to emitter 40. The direction in which axis B of annular region 26 extends coincides with the axis direction. FIG. 1 illustrates the state in which axis B of annular region 26 coincides with rotation axis A. For example, annular region 26 includes a reflective portion that is annularly disposed in a continuous manner and reflects toward light receiver 50 the light emitted from emitter 40.

As illustrated in FIG. 1, substrate 30 is provided facing rotary plate 20 in the axis direction. Substrate 30 is in the shape of a plate whose thickness direction is in the axis direction.

As illustrated in FIG. 1 and FIG. 3, emitter 40 emits light. Specifically, emitter 40 emits light toward rotary plate 20. More specifically, emitter 40 emits light toward first absolute pattern 22, second absolute pattern 23, first incremental pattern 24, second incremental pattern 25, and annular region 26. Emitter 40 is provided on a main surface of substrate 30 closer to rotary plate 20.

Light receiver 50 receives light emitted from emitter 40 and arriving via annular region 26, for example. Light receiver 50 includes first absolute light-receiving region 51, second absolute light-receiving region 52, first incremental light-receiving region 53, second incremental light-receiving region 54, a first set, and a second set. First absolute light-receiving region 51, second absolute light-receiving region 52, first incremental light-receiving region 53, and second incremental light-receiving region 54 are examples of one or more light-receiving regions that receive light emitted from emitter 40 and arriving via one or more patterns.

First absolute light-receiving region 51 receives light emitted from emitter 40 and arriving via first absolute pattern 22.

Second absolute light-receiving region 52 receives light emitted from emitter 40 and arriving via second absolute pattern 23.

First incremental light-receiving region 53 receives light emitted from emitter 40 and arriving via first incremental pattern 24.

Second incremental light-receiving region 54 receives light emitted from emitter 40 and arriving via second incremental pattern 25.

The first set includes first light-receiving region 55 and second light-receiving region 56 that are arranged side by side in first direction E intersecting rotation direction C of rotary plate 20. The second set includes third light-receiving region 57 and fourth light-receiving region 58 that are arranged side by side in second direction F intersecting rotation direction C, and is provided side by side with the first set in rotation direction C. That is to say, third light-receiving region 57 and fourth light-receiving region 58 are provided side by side with first light-receiving region 55 and second light-receiving region 56 in rotation direction C.

In the present embodiment, emitter 40 is interposed between the first set and the second set in rotation direction C. That is to say, emitter 40 is interposed between first and second light-receiving regions 55 and 56 and third and fourth light-receiving regions 57 and 58 in rotation direction C.

Each of first direction E and second direction F is a direction parallel to the plane orthogonal to rotation axis A. In the present embodiment, each of first direction E and second direction F is a direction (Y-axis direction) parallel to straight line G that is orthogonal to rotation axis A, and the first set and the second set are provided line-symmetrically with respect to straight line G. That is to say, first light-receiving region 55 and second light-receiving region 56 are arranged side by side in the direction parallel to straight line G, third light-receiving region 57 and fourth light-receiving region 58 are arranged side by side in the direction parallel to straight line G, and first and second light-receiving regions 55 and 56 and third and fourth light-receiving regions 57 and 58 are provided line-symmetrically with respect to straight line G.

In the radial direction around rotation axis A, first light-receiving region 55 and third light-receiving region 57 are provided at the same position, and second light-receiving region 56 and fourth light-receiving region 58 are provided at the same position.

First light-receiving region 55 and second light-receiving region 56 are provided at respective positions where first light-receiving region 55 and second light-receiving region 56 can receive light (see H in FIG. 3) emitted from emitter 40 and arriving via annular region 26. Third light-receiving region 57 and fourth light-receiving region 58 are provided at respective positions where third light-receiving region 57 and fourth light-receiving region 58 can receive light (see H in FIG. 3) emitted from emitter 40 and arriving via annular region 26.

For example, each of first light-receiving region 55, second light-receiving region 56, third light-receiving region 57, and fourth light-receiving region 58 is a light-receiving region in a light-receiving element. That is to say, for example, light receiver 50 includes a plurality of light-receiving elements.

As illustrated in FIG. 4, in the present embodiment, emitter 40 includes a point light source, and expressions below are satisfied:

$$\text{W2} = (\text{h2/h1}) \times \text{W1}$$

$$W2/L < 1$$

where h1 denotes the dimension between annular region 26 and emitter 40 in the axis direction, h2 denotes the dimension between annular region 26 and first and second light-receiving regions 55 and 56 in the axis direction, L denotes the dimension between an end portion of first light-receiving region 55 farther from second light-receiving region 56 and an end portion of second light-receiving region 56 farther from first light-receiving region 55 in first direction E, W1 denotes the dimension of annular region 26 in first direction E, and W2 denotes the dimension, in first direction E, of light that is emitted from the point light source and, after being incident on annular region 26, irradiates first light-receiving region 55 and second light-receiving region 56. Note that the same relational expressions are satisfied for third light-receiving region 57 and fourth light-receiving region 58 as well.

Dimension L between the end portion of first light-receiving region 55 farther from second light-receiving region 56 and the end portion of second light-receiving region 56 farther from first light-receiving region 55 in first direction E is greater than dimension W2, in first direction E, of light that is emitted from emitter 40 and, after being incident on annular region 26, irradiates first light-receiving region 55 and second light-receiving region 56. Furthermore, the dimension between an end portion of third light-receiving region 57 farther from fourth light-receiving region 58 and an end portion of fourth light-receiving region 58 farther from third light-receiving region 57 in second direction F is greater than the dimension, in second direction F, of light that is emitted from emitter 40 and, after being incident on annular region 26, irradiates third light-receiving region 57 and fourth light-receiving region 58.

Encoder 10 has been described above.

FIG. 5 is a block diagram illustrating a functional configuration of encoder 10 in FIG. 1. The functional configuration of encoder 10 will be described with reference to FIG. 5.

As illustrated in FIG. 5, encoder 10 further includes outputter 60 and calculator 70. Outputter 60 outputs a signal corresponding to light received by light receiver 50. Specifically, outputter 60 outputs a signal corresponding to light received by first absolute light-receiving region 51, a signal corresponding to light received by second absolute light-receiving region 52, a signal corresponding to light received by first incremental light-receiving region 53, a signal corresponding to light received by second incremental light-receiving region 54, a signal corresponding to light received by first light-receiving region 55, a signal corresponding to light received by second light-receiving region 56, a signal corresponding to light received by third light-receiving region 57, and a signal corresponding to light received by fourth light-receiving region 58. For example, outputter 60 outputs a signal corresponding to the intensity of light received by light receiver 50.

Outputter 60 outputs a signal indicating a value of X expressed as below and a signal indicating a value of Y expressed as below, where: A1 denotes a signal value corresponding to light received by first light-receiving region 55; A2 denotes a signal value corresponding to light received by second light-receiving region 56; B1 denotes a signal value corresponding to light received by third light-receiving region 57; and B2 denotes a signal value corresponding to light received by fourth light-receiving region 58.

$$X = (A1 + B2) - (B1 + A2)$$

$$Y = (A1 + B1) - (A2 + B2)$$

Outputter 60 also outputs a signal indicating a value of Q expressed as below.

$$Q = A1 + B1 + A2 + B2$$

Outputter 60 also outputs a signal indicating a value of X1 expressed as below and a signal indicating a value of Y1 expressed as below.

$$X1 = X/Q$$

$$Y1 = Y/Q$$

Calculator 70 calculates a value of P1 expressed as below, where: P denotes a rotation angle (angle address) of rotary plate 20 detected based on light emitted from emitter 40 and, after being incident on one or more patterns, received by one or more light-receiving regions; Δr denotes an eccentric amount of axis B of annular region 26 relative to rotation axis A (see FIG. 6); Φ denotes an eccentric phase of axis B of annular region 26 relative to rotation axis A (see FIG. 6); and r denotes the radius of annular region 26

(see FIG. 6). As described above, in the present embodiment, the one or more patterns are first absolute pattern 22, second absolute pattern 23, first incremental pattern 24, and second incremental pattern 25, and the one or more light-receiving regions are first absolute light-receiving region 51, second absolute light-receiving region 52, first incremental light-receiving region 53, and second incremental light-receiving region 54.

$$P1 = P + \tan^{-1}(\Delta r \times \sin\Phi/r)$$

or

$$P1 = P - \tan^{-1}(\Delta r \times \sin\Phi/r)$$

For example, when Φ = 0 through n/2 and when Φ = 3n/2 through 2n, calculator 70 calculates a value of P1 by P1 = P + $\tan^{-1}$(Δr × sinΦ/r).

Also, for example, when Φ = n/2 through 3n/2, calculator 70 calculates a value of P1 by P1 = P - $\tan^{-1}$(Δr × sinΦ/r).

Furthermore, for example, when the value of Y calculated by Y = (A1 + B1) - (A2 + B2) is positive, calculator 70 calculates a value of P1 by P1 = P + $\tan^{-1}$(Δr × sinΦ/r).

Furthermore, for example, when the value of Y calculated by Y = (A1 + B1) - (A2 + B2) is negative, calculator 70 calculates a value of P1 by P1 = P - $\tan^{-1}$(Δr × sinΦ/r).

The details of the calculation method performed by calculator 70 will be described later.

Outputter 60 outputs a signal indicating the value of P1 calculated by calculator 70.

The functional configuration of encoder 10 has been described above.

FIG. 6 is a schematic diagram illustrating a state in which axis B of annular region 26 is eccentric relative to rotation axis A. FIG. 7 is a schematic diagram illustrating an example of changes in position of light (see H in FIG. 7) that irradiates first light-receiving region 55, second light-receiving region 56, third light-receiving region 57, and fourth light-receiving region 58, caused by rotation of rotary plate 20 in the state in which axis B of annular region 26 is eccentric relative to rotation axis A. FIG. 8 is a graph illustrating an example of signals output by outputter 60 when rotary plate 20 rotates in the state in which axis B of annular region 26 is eccentric relative to rotation axis A. The signals output by outputter 60 will be described with reference to FIG. 6 through FIG. 8.

In the state in which axis B of annular region 26 is eccentric relative to rotation axis A as illustrated in FIG. 6, rotation of rotary plate 20 causes a change in the position of light that irradiates first light-receiving region 55, second light-receiving region 56, third light-receiving region 57, and fourth light-receiving region 58 after being incident on annular region 26.

For example, when rotary plate 20 is in the position indicated by T1 in FIG. 7, light in the state in which axis B of annular region 26 is eccentric relative to rotation axis A is located more to one side in the Y-axis direction than the position of light in the state in which axis B of annular region 26 is not eccentric relative to rotation axis A (see the two-dot-dash line in FIG. 7).

Furthermore, for example, when rotary plate 20 is in the position indicated by T2 in FIG. 7, light in the state in which axis B of annular region 26 is eccentric relative to rotation axis A is located more to one side in the X-axis direction than the position of light in the state in which axis B of annular region 26 is not eccentric relative to rotation axis A (see the two-dot-dash line in FIG. 7).

Furthermore, for example, when rotary plate 20 is in the position indicated by T3 in FIG. 7, light in the state in which axis B of annular region 26 is eccentric relative to rotation axis A is located more to the other side in the Y-axis direction than the position of light in the state in which axis B of annular region 26 is not eccentric relative to rotation axis A (see the two-dot-dash line in FIG. 7).

Furthermore, for example, when rotary plate 20 is in the position indicated by T4 in FIG. 7, light in the state in which axis B of annular region 26 is eccentric relative to rotation axis A is located more to the other side in the X-axis direction than the position of light in the state in which axis B of annular region 26 is not eccentric relative to rotation axis A (see the two-dot-dash line in FIG. 7).

As illustrated in FIG. 8, when rotary plate 20 rotates in the state in which axis B of annular region 26 is eccentric relative to rotation axis A, outputter 60 outputs a signal indicating a shift in the X-axis direction and a signal indicating a shift in the Y-axis direction. These signals show that axis B of annular region 26 is eccentric relative to rotation axis A. Hereinafter, the signal indicating a shift in the X-axis direction may be described as a first signal, and the signal indicating a shift in the Y-axis direction may be described as a second signal.

The signals output by outputter 60 have been described above.

FIG. 9 is a flow chart illustrating an example of the calculation method performed by calculator 70 of encoder 10 in FIG. 1. An example of the calculation method performed by calculator 70 will be described with reference to FIG. 9.

As illustrated in FIG. 9, first, calculator 70 matches the amplitude of the first signal and the amplitude of the second signal (step S1). As described above, the first signal is a signal indicating a shift in the X-axis direction, and the second signal is a signal indicating a shift in the Y-axis direction.

After matching the amplitude of the first signal and the amplitude of the second signal, calculator 70 determines the eccentric phase of axis B relative to rotation axis A and the eccentric amount of axis B relative to rotation axis A (step S2). For example, the eccentric phase of axis B relative to rotation axis A is calculated using the value of X indicated by the first signal and the value of Y indicated by the second signal. Also, for example, the eccentric amount of axis B relative to rotation axis A is calculated from the amplitude of the first signal. Furthermore, for example, the eccentric amount of axis B relative to rotation axis A is calculated from a function or a table prepared in advance. Note that the amplitude used for calculating the eccentric amount may be sequentially determined from a square root of sum of squares of the first signal and the second signal whose amplitudes have been matched. Specifically, for example, the amplitude, which is denoted by G and is used for calculating the eccentric amount, may be calculated in real time by the equation below.

[Math. 1]

$$G = \sqrt{X^2 + Y^2}$$

Calculator 70 calculates an angle after determining the eccentric phase and the eccentric amount (step S3). For example, a true detection address, which is denoted by P1, is calculated by $P1 = P \pm \tan^{-1}(\Delta r \times \sin\Phi/r)$. Here, as described above, P denotes a rotation angle of rotary plate 20 detected based on light emitted from emitter 40 and, after being incident on one or more patterns, received by light receiver 50, r denotes the radius of annular region 26, $\Delta r$ denotes an eccentric amount of axis B of annular region 26 relative to rotation axis A, and $\Phi$ denotes an eccentric phase of axis B of annular region 26 relative to rotation axis A.

An example of the calculation method performed by calculator 70 has been described above.

FIG. 10 is a flow chart illustrating another example of the calculation method performed by calculator 70 of encoder 10 in FIG. 1. Another example of the calculation method performed by calculator 70 will be described with reference to FIG. 10. Note that the following description mainly focuses on the differences from the example of the calculation method illustrated in FIG. 9.

As illustrated in FIG. 10, first, calculator 70 obtains the amplitude of the second signal (step S11). For example, calculator 70 obtains the amplitude of the second signal prior to one rotation. For example, calculator 70 obtains the amplitude of the second signal from one rotation in a test mode or one rotation in continuous rotations. Specifically, for example, calculator 70 obtains the amplitude of the second signal from arbitrary 360-degree data. Also, for example, calculator 70 obtains the amplitude of the second signal by clipping a peak value from arbitrary 180-degree data.

After obtaining the amplitude of the second signal, calculator 70 determines the eccentric phase of axis B relative to rotation axis A and the eccentric amount of axis B relative to rotation axis A (step S2). For example, calculator 70 estimates the waveform of the second signal from the amplitude of the second signal obtained, and determines the eccentric phase of axis B relative to rotation axis A from: the value of Y indicated by the second signal output from outputter 60; and the increase and decrease tendency of the signal level of the second signal.

In such a manner as described, calculator 70 may calculate the eccentric phase etc., of axis B relative to rotation axis A without using the first signal.

Another example of the calculation method performed by calculator 70 has been described above.

As described above, encoder 10 can more precisely detect the eccentricity of rotary plate 20 relative to detection target 1. In addition, since encoder 10 includes first light-receiving region 55, second light-receiving region 56, third light-receiving region 57, and fourth light-receiving region 58 on single substrate 30, encoder 10 can be downsized and less expensive.

Encoder 10 according to Embodiment 1 has been described above.

Encoder 10 according to Embodiment 1 includes: emitter 40 that emits light; rotary plate 20 that rotates and includes annular region 26 that reflects the light emitted from emitter 40, annular region 26 being provided surrounding rotation axis A of rotary plate 20; and light receiver 50 that receives light emitted from emitter 40 and arriving via annular region 26. Light receiver 50 includes: a first set that includes first light-receiving region 55 and second light-receiving region 56 that are arranged side by side in first direction E intersecting rotation direction C of rotary plate 20; and a second set that includes third light-receiving region 57 and fourth light-receiving region 58 that are arranged side by side in second direction F intersecting rotation direction C and that is provided side by side with the first set in rotation direction C.

Accordingly, light receiver 50 includes: the first set that includes first light-receiving region 55 and second light-receiving region 56 that are arranged side by side in first direction E intersecting rotation direction C of rotary plate 20; and the second set that includes third light-receiving region 57 and fourth light-receiving region 58 that are arranged side by side in second direction F intersecting rotation direction C and that is provided side by side with the first set in rotation direction C. With this, rotation of rotary plate 20 causes a change in the position of light received by first light-receiving region 55, second light-receiving region 56, third light-receiving region 57, and fourth light-receiving region 58, thus enabling precise detection of the eccentricity of rotary plate 20 relative to detection target 1.

Furthermore, encoder 10 according to Embodiment 1 further includes outputter 60 that outputs a signal indicating a value of X expressed as below and a signal indicating a value of Y expressed as below:

$$X = (A1 + B2) - (B1 + A2)$$

$$Y = (A1 + B1) - (A2 + B2)$$

where A1 denotes a signal value corresponding to light received by first light-receiving region 55, A2 denotes a signal value corresponding to light received by second light-receiving region 56, B1 denotes a signal value corresponding to light received by third light-receiving region 57, and B2 denotes a signal value corresponding to light received by fourth light-receiving region 58.

Accordingly, it is possible to output a signal corresponding to the position of rotary plate 20, thus enabling further precise detection of the eccentricity of rotary plate 20 relative to detection target 1.

Furthermore, in encoder 10 according to Embodiment 1, outputter 60 outputs a signal indicating a value of Q expressed as below:

$$Q = A1 + B1 + A2 + B2$$

Accordingly, it is possible to output a signal corresponding to the position of rotary plate 20, thus enabling further precise detection of the eccentricity of rotary plate 20 relative to detection target 1.

Furthermore, in encoder 10 according to Embodiment 1, outputter 60 outputs a signal indicating a value of X1 expressed as below and a signal indicating a value of Y1 expressed as below:

$$X1 = X/Q$$

$$Y1 = Y/Q$$

Accordingly, it is possible to output a signal corresponding to the position of rotary plate 20, thus enabling further precise detection of the eccentricity of rotary plate 20 relative to detection target 1.

Furthermore, in encoder 10 according to Embodiment 1, rotary plate 20 includes one or more patterns for detecting a rotation angle of rotary plate 20, and light receiver 50 includes one or more light-receiving regions that receive light emitted from emitter 40 and arriving via the one or more patterns. Encoder 10 according to Embodiment 1 further includes calculator 70 that calculates a value of P1 expressed as below:

$$P1 = P + \tan^{-1}(\Delta r \times \sin\Phi/r)$$

or

$$P1 = P - \tan^{-1}(\Delta r \times \sin\Phi / r)$$

where P denotes a rotation angle of rotary plate 20 detected based on the light emitted from emitter 40 and, after being incident on the one or more patterns, received by the one or more light-receiving regions, Δr denotes an eccentric amount of axis B of annular region 26 relative to rotation axis A, Φ denotes an eccentric phase of axis B relative to rotation axis A, and r denotes the radius of annular region 26.

Outputter 60 outputs a signal indicating the value of P1 calculated by calculator 70.

Accordingly, it is possible to detect the correct position of detection target 1 even in the state in which rotary plate 20 is eccentric relative to detection target 1.

Furthermore, in encoder 10 according to Embodiment 1, emitter 40 is interposed between the first set and the second set in rotation direction C.

Accordingly, it is possible to inhibit reduction of the amount of light received by first light-receiving region 55, second light-receiving region 56, third light-receiving region 57, and fourth light-receiving region 58, thus enabling further precise detection of the eccentricity of rotary plate 20 relative to detection target 1.

Furthermore, in encoder 10 according to Embodiment 1, each of first direction E and second direction F is a direction parallel to straight line G orthogonal to rotation axis A, and the first set and the second set are provided line-symmetrically with respect to straight line G.

It is possible to inhibit reduction of the amount of light received by first light-receiving region 55, second light-receiving region 56, third light-receiving region 57, and fourth light-receiving region 58 and inhibit variation in the amount of light received by first light-receiving region 55, second light-receiving region 56, third light-receiving region 57, and fourth light-receiving region 58, thus enabling further precise detection of the eccentricity of rotary plate 20 relative to detection target 1.

Furthermore, in encoder 10 according to Embodiment 1, dimension L between an end portion of first light-receiving region 55 farther from second light-receiving region 56 and an end portion of second light-receiving region 56 farther from first light-receiving region 55 in first direction E is greater than dimension W2, in the first direction, of light that is emitted from emitter 40 and, after being incident on annular region 26, irradiates first light-receiving region 55 and second light-receiving region 56, and the dimension between an end portion of third light-receiving region 57 farther from fourth light-receiving region 58 and an end portion of fourth light-receiving region 58 farther from third light-receiving region 57 in second direction F is greater than the dimension, in second direction F, of light that is emitted from emitter 40 and, after being incident on annular region 26, irradiates third light-receiving region 57 and fourth light-receiving region 58.

Accordingly, in the state in which rotary plate 20 is eccentric relative to detection target 1, rotation of rotary plate 20 can cause an appropriate change in the position of light received by first light-receiving region 55 and second light-receiving region 56 and the position of light received by third light-receiving region 57 and fourth light-receiving region 58, thus enabling further precise detection of the eccentricity of rotary plate 20 relative to detection target 1.

Furthermore, in encoder 10 according to Embodiment 1, emitter 40 includes a point light source, and expressions below are satisfied:

$$W2 = (h2 / h1) \times W1$$

$$W2 / L < 1$$

where h1 denotes the dimension between annular region 26 and emitter 40 in an axis direction in which rotation axis A extends, h2 denotes the dimension between annular region 26 and first and the second light-receiving regions 55 and 56 in the axis direction in which rotation axis A extends, L denotes the dimension between the end portion of the first light-receiving region farther from the second light-receiving region and the end portion of the second light-receiving region farther from the first light-receiving region in the first direction, W1 denotes the dimension of the annular region in the first direction, and W2 denotes the dimension, in the first direction, of light that is emitted from the point light source and, after being incident on the annular region, irradiates the first light-receiving region and the second light-receiving region.

Accordingly, in the state in which rotary plate 20 is eccentric relative to detection target 1, rotation of rotary plate 20 can cause an appropriate change in the position of light received by first light-receiving region 55 and second light-receiving region 56, thus enabling further precise detection of the eccentricity of rotary plate 20 relative to detection target 1.

[Embodiment 2]

FIG. 11 is a schematic diagram of rotary plate 20a of an encoder according to Embodiment 2 as viewed in the axis direction. FIG. 12 is a schematic diagram of emitter 40a and light receiver 50a of the encoder in FIG. 11 as viewed in the axis direction. A configuration of the encoder according to Embodiment 2 will be described with reference to FIG. 11 and FIG. 12. Note that the following description mainly focuses on the differences from encoder 10 according to Embodiment 1.

Note that FIG. 11 illustrates only the half of rotary plate 20a to avoid complication of the drawing.

As illustrated in FIG. 11, the encoder according to Embodiment 2 includes rotary plate 20a different from rotary plate 20. Also, as illustrated in FIG. 12, the encoder according to Embodiment 2 includes emitter 40a different from emitter 40 and light receiver 50a different from light receiver 50. The encoder according to Embodiment 2 is different from encoder 10 mainly in these aspects.

As illustrated in FIG. 11, rotary plate 20a includes main body 21, absolute pattern 22a, incremental pattern 24a, and annular region 26a.

Annular region 26a is a ring-shaped region that is provided surrounding rotation axis A and reflects the light emitted from emitter 40a. Annular region 26a reflects toward light receiver 50a the light emitted from emitter 40a. Annular region 26a is provided on the main surface of main body 21 closer to emitter 40a. The direction in which axis B of annular region 26a extends coincides with the axis direction. For example, annular region 26a includes a reflective portion that is annularly disposed in a continuous manner and reflects toward light receiver 50a the light emitted from emitter 40a.

As illustrated in FIG. 12, emitter 40a emits light. Specifically, emitter 40a emits light toward rotary plate 20a. More specifically, emitter 40a emits light toward absolute pattern 22a, incremental pattern 24a, and annular region 26a. Emitter 40a is provided on the main surface of substrate 30 closer to rotary plate 20a.

Light receiver 50a receives light emitted from emitter 40a and arriving via annular region 26a, for example. Light receiver 50a includes first absolute light-receiving region 51a, second absolute light-receiving region 52a, first incremental light-receiving region 53a, second incremental light-receiving region 54a, a first set, and a second set.

First absolute light-receiving region 51a and second absolute light-receiving region 52a each receive light emitted from emitter 40a and arriving via absolute pattern 22a. First absolute light-receiving region 51a and second absolute light-receiving region 52a are arranged out of alignment with each other in rotation direction C.

First incremental light-receiving region 53a and second incremental light-receiving region 54a each receive light emitted from emitter 40a and arriving via incremental pattern 24a. First incremental light-receiving region 53a and second incremental light-receiving region 54a are arranged out of alignment with each other in rotation direction C.

The first set includes first light-receiving region 55a and second light-receiving region 56a that are arranged side by side in first direction E intersecting rotation direction C of rotary plate 20a. The second set includes third light-receiving region 57a and fourth light-receiving region 58a that are arranged side by side in second direction F intersecting rotation direction C, and is provided side by side with the first set in rotation direction C.

An end portion of first light-receiving region 55a closer to second light-receiving region 56a, an end portion of second light-receiving region 56a closer to first light-receiving region 55a, an end portion of third light-receiving region 57a closer to fourth light-receiving region 58a, and an end portion of fourth light-receiving region 58a closer to third light-receiving region 57a are each in the shape of a straight line extending in the tangential direction with respect to rotation direction C.

Also, an end portion of first light-receiving region 55a farther from second light-receiving region 56a, an end portion of second light-receiving region 56a farther from first light-receiving region 55a, an end portion of third light-receiving region 57a farther from fourth light-receiving region 58a, and an end portion of fourth light-receiving region 58a farther from third light-receiving region 57a are each in the shape of a straight line extending in the tangential direction with respect to rotation direction C.

The encoder according to Embodiment 2 has been described above.

In the encoder according to Embodiment 2, the end portion of first light-receiving region 55a closer to second light-receiving region 56a, the end portion of second light-receiving region 56a closer to first light-receiving region 55a, the end portion of third light-receiving region 57a closer to fourth light-receiving region 58a, and the end portion of fourth light-receiving region 58a closer to third light-receiving region 57a are each in the shape of a straight line extending in the tangential direction with respect to rotation direction C.

Accordingly, it is possible to inhibit reduction of the amount of light received by first light-receiving region 55a, second light-receiving region 56a, third light-receiving region 57a, and fourth light-receiving region 58a, thus enabling further precise detection of the eccentricity of rotary plate 20a relative to detection target 1.

[Embodiment 3]

FIG. 13 is a schematic diagram of rotary plate 20b of an encoder according to Embodiment 3 as viewed in the axis direction. FIG. 14 is a schematic diagram of emitter 40b and light receiver 50b of the encoder in FIG. 13 as viewed in the axis direction. A configuration of the encoder according to Embodiment 3 will be described with reference to FIG. 13 and FIG. 14. Note that the following description mainly focuses on the differences from encoder 10 according to Embodiment 1.

Note that FIG. 13 illustrates only the half of rotary plate 20b to avoid complication of the drawing.

As illustrated in FIG. 13, the encoder according to Embodiment 3 includes rotary plate 20b different from rotary plate 20. Also, as illustrated in FIG. 14, the encoder according to Embodiment 3 includes emitter 40b different from emitter 40 and light receiver 50b different from light receiver 50. The encoder according to Embodiment 3 is different from encoder 10 mainly in these aspects.

As illustrated in FIG. 13, rotary plate 20b includes main body 21, absolute pattern 22b, incremental pattern 24b, and annular region 26b.

Annular region 26b is a ring-shaped region that is provided surrounding rotation axis A and reflects the light emitted from emitter 40b. Annular region 26b reflects toward light receiver 50b the light emitted from emitter 40b. Annular region 26b is provided on the main surface of main body 21 closer to emitter 40b. The direction in which axis B of annular region 26b extends coincides with the axis direction. For example, annular region 26b includes a reflective portion that is annularly disposed in a continuous manner and reflects toward light receiver 50b the light emitted from emitter 40b.

Annular region 26b is located inwardly of absolute pattern 22b and incremental pattern 24b in the radial direction around axis center B. That is to say, among absolute pattern 22b, incremental pattern 24b, and annular region 26b, annular region 26b is located most inwardly in the radial direction.

As illustrated in FIG. 14, emitter 40b emits light. Specifically, emitter 40b emits light toward rotary plate 20b. More specifically, emitter 40b emits light toward absolute pattern 22b, incremental pattern 24b, and annular region 26b. Emitter 40b is provided on the main surface of substrate 30 closer to rotary plate 20b.

Light receiver 50b receives, for example, light emitted from emitter 40b and arriving via annular region 26b. Light receiver 50b includes first absolute light-receiving region 51b, second absolute light-receiving region 52b, first incremental light-receiving regions 53b, second incremental light-receiving regions 54b, a first set, and a second set.

First absolute light-receiving region 51b and second absolute light-receiving region 52b each receive light emitted from emitter 40b and arriving via absolute pattern 22b.

First incremental light-receiving regions 53b and second incremental light-receiving regions 54b each receive light emitted from emitter 40b and arriving via incremental pattern 24b.

The first set includes first light-receiving region 55b and second light-receiving region 56b that are arranged side by side in first direction E intersecting rotation direction C of rotary plate 20b. The second set includes third light-receiving region 57b and fourth light-receiving region 58b that are arranged side by side in second direction F intersecting rotation direction C, and is provided side by side with the first set in rotation direction C.

Each of the first set and the second set is located inwardly of emitter 40b in the radial direction around rotation axis A. That is to say, each of first light-receiving region 55b, second light-receiving region 56b, third light-receiving region 57b, and fourth light-receiving region 58b is located inwardly of emitter 40b in the radial direction around rotation axis A.

An end portion of first light-receiving region 55b closer to second light-receiving region 56b, an end portion of second light-receiving region 56b closer to first light-receiving region 55b, an end portion of third light-receiving region 57b closer to fourth light-receiving region 58b, and an end portion of fourth light-receiving region 58b closer to third light-receiving region 57b are each in the shape of a curved line extending in rotation direction C.

Also, an end portion of first light-receiving region 55b farther from second light-receiving region 56b, an end portion of second light-receiving region 56b farther from first light-receiving region 55b, an end portion of third light-receiving region 57b farther from fourth light-receiving region 58b, and an end portion of fourth light-receiving region 58b farther from third light-receiving region 57b are each in the shape of a curved line extending in rotation direction C.

First light-receiving region 55b, second light-receiving region 56b, third light-receiving region 57b, and fourth light-receiving region 58b are each in the shape of an arc extending in rotation direction C.

First direction E is a direction that coincides with the radial direction around rotation axis A, and second direction F is a direction that coincides with the radial direction around rotation axis A and intersects first direction E.

First light-receiving region 55b and third light-receiving region 57b are adjacent to each other in rotation direction C, and second light-receiving region 56b and fourth light-receiving region 58b are adjacent to each other in rotation direction C.

The encoder according to Embodiment 3 has been described above.

In the encoder according to Embodiment 3, each of the first set and the second set is located inwardly of emitter 40b in the radial direction around rotation axis A.

Accordingly, it is possible to more easily bend the light received by first light-receiving region 55b, second light-receiving region 56b, third light-receiving region 57b, and fourth light-receiving region 58b, thus enabling further precise detection of the eccentricity of rotary plate 20b relative to detection target 1.

Furthermore, in the encoder according to Embodiment 3, an end portion of first light-receiving region 55b closer to second light-receiving region 56b, an end portion of second light-receiving region 56b closer to first light-receiving region 55b, an end portion of third light-receiving region 57b closer to fourth light-receiving region 58b, and an end portion of fourth light-receiving region 58b closer to third light-receiving region 57b are each in the shape of a curved line extending in rotation direction C.

Accordingly, it is possible to inhibit reduction of the amount of light received by first light-receiving region 55b, second light-receiving region 56b, third light-receiving region 57b, and fourth light-receiving region 58b, thus enabling further precise detection of the eccentricity of rotary plate 20b relative to detection target 1.

Furthermore, in the encoder according to Embodiment 3, first direction E is a direction that coincides with the radial direction around rotation axis A, and second direction F is a direction that coincides with the radial direction around rotation axis A and intersects first direction E.

It is possible to further inhibit reduction of the amount of light received by first light-receiving region 55b, second light-receiving region 56b, third light-receiving region 57b, and fourth light-receiving region 58b, thus enabling further precise detection of the eccentricity of rotary plate 20b relative to detection target 1.

[Embodiment 4]

FIG. 15 is a schematic diagram of emitter 40c and light receiver 50c of an encoder according to Embodiment 4 as viewed in the axis direction. A configuration of the encoder according to Embodiment 4 will be described with reference to FIG. 15. Note that the following description mainly focuses on the differences from encoder 10 according to Embodiment 1.

As illustrated in FIG. 15, the encoder according to Embodiment 4 is mainly different from encoder 10 in including a rotary plate (not illustrated) different from rotary plate 20, emitter 40c different from emitter 40, and light receiver 50c different from light receiver 50.

Emitter 40c emits light. Specifically, emitter 40c emits light toward the rotary plate. More specifically, emitter 40c emits light toward, for example, an annular region (not illustrated) of the rotary plate. Emitter 40c is provided on the main surface of substrate 30 closer to the rotary plate.

Light receiver 50c receives light emitted from emitter 40c and arriving via the annular region of the rotary plate of the encoder according to Embodiment 4, for example. Light receiver 50c includes first absolute light-receiving region 51c, second absolute light-receiving region 52c, first incremental light-receiving region 53c, second incremental light-receiving region 54c, a first set, and a second set.

First absolute light-receiving region 51c and second absolute light-receiving region 52c each receive light emitted from emitter 40c and arriving via an absolute pattern of the rotary plate.

First incremental light-receiving region 53c and second incremental light-receiving region 54c each receive light emitted from emitter 40c and arriving via an incremental pattern of the rotary plate.

The first set includes first light-receiving region 55c and second light-receiving region 56c that are arranged side by side in first direction E intersecting rotation direction C of the rotary plate. The second set includes third light-receiving region 57c and fourth light-receiving region 58c that are arranged side by side in second direction F intersecting rotation direction C, and is provided side by side with the first set in rotation direction C.

A phase difference of 90 degrees is provided between the first set and the second set in rotation direction C. That is to say, the second set is provided at a position shifted from the first set by 90 degrees in rotation direction C.

The encoder according to Embodiment 4 has been described above.

[Embodiment 5]

FIG. 16 is an explanatory diagram for describing a relationship between the dimensions of first light-receiving region 55d and second light-receiving region 56d and the dimensions of light that irradiates first light-receiving region 55d and second light-receiving region 56d in an encoder according to Embodiment 5. A configuration of the encoder according to Embodiment 5 will be described with reference to FIG. 16.

As illustrated in FIG. 16, in the present embodiment, emitter 40d includes a surface light source, and expressions below are satisfied:

$$W2 = ((h2/h1) + 1) \times W1 + h2/h1 \times D$$

$$W2/L < 1$$

where h1 denotes the dimension between annular region 26d and emitter 40d in an axis direction in which rotation axis A extends, h2 denotes the dimension between annular region 26d and first and the second light-receiving regions 55d and 56d in the axis direction in which rotation axis A extends, L denotes the dimension between the end portion of first light-receiving region 55d farther from second light-receiving region 56d and the end portion of second light-receiving region 56d farther from first light-receiving region 55d in first direction E, W1 denotes the dimension of annular region 26d in first direction E, W2 denotes the dimension, in first direction E, of light that is emitted from the surface light source and, after being incident on annular region 26d, irradiates first light-receiving region 55d and second light-receiving region 56d, and D denotes the dimension of a light emission port of the surface light source in first direction E. Even if the reflected light on the light-receiving surface moves due to the maximum correctable eccentricity, L is designed to, for example, inhibit the reflected light from going outside the light-receiving regions (first light-receiving region 55d and second light-receiving region 56d). Note that the same relational expressions are satisfied for a third light-receiving region and a fourth light-receiving region as well.

The encoder according to Embodiment 5 has been described above.

In the encoder according to Embodiment 5, emitter 40d includes a surface light source, and expressions below are satisfied:

$$W2 = ((h2/h1) + 1) \times W1 + h2/h1 \times D$$

$$W2/L < 1$$

where h1 denotes the dimension between annular region 26d and emitter 40d in an axis direction in which rotation axis A extends, h2 denotes the dimension between annular region 26d and first and the second light-receiving regions 55d and 56d in the axis direction in which rotation axis A extends, L denotes the dimension between the end portion of first light-receiving region 55d farther from second light-receiving region 56d and the end portion of second light-receiving region 56d farther from first light-receiving region 55d in first direction E, W1 denotes the dimension of annular region 26d in first direction E, W2 denotes the dimension, in first direction E, of light that is emitted from the surface light source and, after being incident on annular region 26d, irradiates first light-receiving region 55d and second light-receiving region 56d, and D denotes the dimension of a light emission port of the surface light source in first direction E.

Accordingly, in the state in which the rotary plate is eccentric relative to detection target 1, rotation of the rotary plate can cause an appropriate change in the position of light received by first light-receiving region 55d and second light-receiving region 56d, thus enabling further precise detection of the eccentricity of the rotary plate relative to detection target 1.

[Embodiment 6]

FIG. 17 is an explanatory diagram for describing a relationship between the dimensions of first light-receiving region 55e and second light-receiving region 56e and the dimensions of light that irradiates first light-receiving region 55e and second light-receiving region 56e in an encoder according to Embodiment 6. A configuration of the encoder according to Embodiment 6 will be described with reference to FIG. 17. Note that the following description mainly focuses on the differences from encoder 10 according to Embodiment 1.

As illustrated in FIG. 17, the encoder according to Embodiment 6 includes emitter 40e, annular region 26e, first light-receiving region 55e, and second light-receiving region 56e.

Annular region 26e is recessed in the axis direction in which rotation axis A extends. Light emitted from emitter 40e and reflected by annular region 26e irradiates first light-receiving region 55e and second light-receiving region 56e while converging. Similarly, light emitted from emitter 40e and reflected by annular region 26e also irradiates a third light-receiving region and a fourth light-receiving region while converging.

The encoder according to Embodiment 6 has been described above.

In the encoder according to Embodiment 6, annular region 26e is recessed in the axis direction in which rotation axis A extends.

Accordingly, it is possible to inhibit reduction of the intensity of light received by each of first light-receiving region 55e, second light-receiving region 56e, the third light-receiving region, and the fourth light-receiving region, thus enabling further precise detection of the eccentricity of the rotary plate relative to detection target 1.

[Embodiment 7]

FIG. 18 is a flow chart illustrating an example of an attachment method according to Embodiment 7. An example of the attachment method according to Embodiment 7 will be described with reference to FIG. 18. Described here is an attachment method for attaching encoder 10 to detection target 1.

As illustrated in FIG. 18, first, rotary plate 20 is attached to detection target 1 (step S21). For example, rotary plate 20 is attached to detection target 1 by using a screw, for example.

When rotary plate 20 is attached to detection target 1, rotary plate 20 is rotated about rotation axis A (step S22). Note that rotary plate 20 need not necessarily be rotated.

After rotary plate 20 is rotated about rotation axis A, a signal output by outputter 60 is obtained (step S23). A value of X and a value of Y are obtained from the signal output by outputter 60.

When the signal output by outputter 60 is obtained, it is determined whether each of the value of X and the value of Y is 0 (step S24).

When each of the value of X and the value of Y is not 0 (No in step S24), the attachment position of rotary plate 20 attached to detection target 1 is adjusted (step S25).

In such a manner as described, when each of the value of X and the value of Y is not 0, the attachment position of rotary plate 20 attached to detection target 1 is adjusted, and it is determined again whether each of the value of X and the value of Y is 0. Encoder 10 is attached to detection target 1 at a position where the value of X output by outputter 60 becomes 0 and the value of Y output by outputter 60 becomes 0.

The attachment method according to Embodiment 7 has been described above.

The attachment method according to Embodiment 7 is an attachment method of attaching encoder 10 to detection target 1. Encoder 10 includes: emitter 40 that emits light; rotary plate 20 that rotates and includes annular region 26 that reflects the light emitted from emitter 40, annular region 26 being provided surrounding rotation axis A of rotary plate 20; and light receiver 50 that receives light emitted from emitter 40 and arriving via annular region 26. Light receiver 50 includes: a first set that includes first light-receiving region 55 and second light-receiving region 56 that are arranged side by side in first direction E intersecting rotation direction C of rotary plate 20; and a second set that includes third light-receiving region 57 and fourth light-receiving region 58 that are arranged side by side in second direction F intersecting rotation direction C and that is provided side by side with the first set in rotation direction C. Encoder 10 further includes outputter 60 that outputs a signal indicating a value of X expressed as below and a signal indicating a value of Y expressed as below:

$$X = (A1 + B2) - (B1 + A2)$$

$$Y = (A1 + B1) - (A2 + B2)$$

where A1 denotes a signal value corresponding to light received by first light-receiving region 55, A2 denotes a signal value corresponding to light received by second light-receiving region 56, B1 denotes a signal value corresponding to light received by third light-receiving region 57, and B2 denotes a signal value corresponding to light received by fourth light-receiving region 58. The attachment method includes: step S21 of attaching rotary plate 20 to detection target 1; and after attaching rotary plate 20 to detection target 1, step S23 of causing outputter 60 to output the signal indicating the value of X and the signal indicating the value of Y. In the attaching of rotary plate 20 to detection target 1, rotary plate 20 is attached to detection target 1 at a position where the value of X indicated by the signal output by outputter 60 becomes 0 and the value of Y indicated by the signal output by outputter 60 becomes 0.

Accordingly, it is possible to inhibit attachment of encoder 10 in a state in which encoder 10 is eccentric relative to detection target 1.

[Other embodiments etc.]

Embodiments have been described above as examples of the techniques disclosed in the present application. The techniques according to the present disclosure are, however, not limited to these embodiments and are applicable to embodiments or variations resulting from modifications, replacements, additions, omissions as appropriate, so long as they are within the scope of the appended claims.

In the embodiments described above, annular regions 26 through 26e reflect light; however, the present disclosure is not limited to this. For example, the annular region may transmit the light emitted from the emitter, toward the light receiver.

Note that in the above embodiments, each constituent element may be configured as dedicated hardware or may be realized by executing a software program suitable for the constituent element. Each of the constituent elements may be realized by means of a program executor, such as a central processing unit (CPU) or a processor, reading and executing a software program recorded on a recording medium such as a hard disk or semiconductor memory. Here, the software programs for realizing, for example, the calculation methods and the attachment method according to the above embodiments are computer programs that cause a computer to perform the steps of the flow charts in FIG. 9, FIG. 10, and FIG. 18.

Note that the following cases are also included in the present disclosure.

(1) At least one device described above is specifically a computer system including a microprocessor, ROM, RAM, a hard disk unit, a display unit, a keyboard, and a mouse, for example. A computer program is stored in the RAM or the hard disk unit. At least one device described above achieves its function as a result of the microprocessor operating according to the computer program. Here, the computer program is configured by combining a plurality of instruction codes indicating instructions to be given to the computer, in order to achieve a given function.

(2) Some or all of the constituent elements included in at least one device described above may be configured from a single system large-scale integration (LSI) circuit. A system LSI circuit is a super-multifunction LSI circuit manufactured with a plurality of components integrated on a single chip, and is specifically a computer system including a microprocessor, ROM, and RAM, for example. A computer program is stored in the RAM. The system LSI achieves its function as a result of the microprocessor operating according to the computer program.

(3) Some or all of the constituent elements included in at least one device described above may be configured as an integrated circuit (IC) card that is detachably attached to the device, or as a stand-alone module. The IC or and the module is a computer system including a microprocessor, ROM, and RAM, for example. The IC card or the module may include the super-multifunction LSI circuit described above. The IC card or the module achieves its function as a result of the microprocessor operating according to a computer program. The IC card or the module may be tamperproof.

(4) The present disclosure may be implemented as the methods described above. The present disclosure may also be a computer program that realizes such methods using a computer, or a digital signal including the computer program.

The present disclosure may also be a computer-readable recording medium, such as a flexible disk, a hard disk, a compact disc (CD)-ROM, a DVD, a DVD-ROM, a DVD-RAM, a Blu-ray Disc (BD; registered trademark), semiconductor memory, etc., having recording thereon the computer program or the digital signal. The present disclosure may also be the digital signal recorded on these recording media.

The present disclosure may transmit the computer program or the digital signal via, for example, a telecommunication line, a wireless or wired communication line, a network such as the Internet, or data broadcasting.

The program or the digital signal may be implemented by another independent computer system by recording the program or the digital signal on a recording medium and transporting it or by transporting the program or the digital signal via a network, etc.

[Industrial Applicability]

The encoders according to the present disclosure can be used in detecting rotation of, for example, the rotary shaft of a motor that rotates and drives a load.

[Reference Signs List]

10 encoder
20, 20a, 20brotary plate
21 main body
22 first absolute pattern
22a, 22b absolute pattern
23 second absolute pattern
24 first incremental pattern
24a, 24b incremental pattern
25 second incremental pattern
26, 26a, 26b, 26d, 26e annular region
30 substrate
40, 40a, 40b, 40c, 40d, 40e emitter
50, 50a, 50b, 50c light receiver
51, 51a, 51b, 51c first absolute light-receiving region
52, 52a, 52b, 52c second absolute light-receiving region
53, 53a, 53b, 53c first incremental light-receiving region
54, 54a, 54b, 54c second incremental light-receiving region
55, 55a, 55b, 55c, 55d, 55e first light-receiving region
56, 56a, 56b, 56c, 56d, 56e second light-receiving region
57, 57a, 57b, 57c third light-receiving region
58, 58a, 58b, 58c fourth light-receiving region
60 outputter
70 calculator

**Claims**

1. An encoder (10) comprising:

   an emitter (40) that emits light;
   a rotary plate (20) that rotates and includes an annular region (26) that reflects or transmits the light emitted from the emitter (40), the annular region (26) being provided surrounding a rotation axis (A) of the rotary plate (20); and
   a light receiver (50) that receives light emitted from the emitter (40) and arriving via the annular region (26),
   wherein the light receiver (50) includes: a first set that includes a first light-receiving region (55) and a second light-receiving region (56) that are arranged side by side in a first direction (E) intersecting a rotation direction (C) of the rotary plate (20); and a second set that includes a third light-receiving region (57) and a fourth light-receiving region (58) that are arranged side by side in a second direction (F) intersecting the rotation direction (C) and that is provided side by side with the first set in the rotation direction (C)
   **characterized in that** the encoder further comprises:

   an outputter (60) that outputs a signal indicating a value of X expressed as below and a signal indicating a value of Y expressed as below:

$$X = (A1 + B2) - (B1 + A2)$$

$$Y = (A1 + B1) - (A2 + B2)$$

   where A1 denotes a signal value corresponding to light received by the first light-receiving region (55),
   A2 denotes a signal value corresponding to light received by the second light-receiving region (56),
   B1 denotes a signal value corresponding to light received by the third light-receiving region (57), and
   B2 denotes a signal value corresponding to light received by the fourth light-receiving region (58),
   the first direction (E) is a direction that coincides with a radial direction around the rotation axis (A), and
   the second direction (F) is a direction that coincides with the radial direction around the rotation axis (A).

2. The encoder (10) according to claim 1,
   wherein the outputter (60) outputs a signal indicating a value of Q expressed as below:

$$Q = A1 + B1 + A2 + B2.$$

3. The encoder (10) according to claim 2,
   wherein the outputter (60) outputs a signal indicating a value of X1 expressed as below and a signal indicating a value of Y1 expressed as below:

$$X1 = X/Q$$

$$Y1 = Y/Q.$$

4. The encoder (10) according to any one of claims 1 to 3,

   wherein the rotary plate (20) includes one or more patterns for detecting a rotation angle of the rotary plate (20),
   the light receiver (50) includes one or more light-receiving regions that receive light emitted from the emitter (40) and arriving via the one or more patterns,
   the encoder (10) further comprises:

   a calculator (70) that calculates a value of P1 expressed as below:

$$P1 = P + \tan^{-1}(\Delta r \times \sin\Phi/r)$$

   or

$$P1 = P - \tan^{-1}(\Delta r \times \sin\Phi/r)$$

where P denotes a rotation angle of the rotary plate (20) detected based on the light emitted from the emitter (40) and, after being incident on the one or more patterns, received by the one or more light-receiving regions (55, 56, 57, 58),

Δr denotes an eccentric amount of an axis of the annular region (26) relative to the rotation axis (A),

Φ denotes an eccentric phase of the axis relative to the rotation axis (A), and

r denotes a radius of the annular region (26), and

the outputter (60) outputs a signal indicating the value of P1 calculated by the calculator (70).

5. The encoder (10) according to any one of claims 1 to 3,
wherein the emitter (40) is interposed between the first set and the second set in the rotation direction (C).

6. The encoder (10) according to any one of claims 1 to 3,
wherein each of the first set and the second set is located inwardly of the emitter (40) in a radial direction around the rotation axis (A).

7. The encoder (10) according to any one of claims 1 to 3,
wherein an end portion of the first light-receiving region (55) closer to the second light-receiving region (56), an end portion of the second light-receiving region (56) closer to the first light-receiving region (55), an end portion of the third light-receiving region (57) closer to the fourth light-receiving region (58), and an end portion of the fourth light-receiving region (58) closer to the third light-receiving region (57) are each in a shape of a curved line extending in the rotation direction (C).

8. The encoder (10) according to any one of claims 1 to 3,
wherein an end portion of the first light-receiving region (55) closer to the second light-receiving region (56), an end portion of the second light-receiving region (56) closer to the first light-receiving region (55), an end portion of the third light-receiving region (57) closer to the fourth light-receiving region (58), and an end portion of the fourth light-receiving region (58) closer to the third light-receiving region (57) are each in a shape of a straight line extending in a tangential direction with respect to the rotation direction (C).

9. The encoder (10) according to any one of claims 1 to 3,

wherein each of the first direction (E) and the second direction (F) is a direction parallel to a straight line (G) orthogonal to the rotation axis (A), and
the first set and the second set are provided line-symmetrically with respect to the straight line (G).

10. The encoder (10) according to any one of claims 1 to 3,
wherein
the second direction (F) intersects the first direction (E).

11. The encoder (10) according to any one of claims 1 to 3,

wherein a dimension between an end portion of the first light-receiving region (55) farther from the second light-receiving region (56) and an end portion of the second light-receiving region (56) farther from the first light-receiving region (55) in the first direction (E) is greater than a dimension, in the first direction (E), of light that is emitted from the emitter (40) and, after being incident on the annular region (26), irradiates the first light-receiving region (55) and the second light-receiving region (56), and
a dimension between an end portion of the third light-receiving region (57) farther from the fourth light-receiving region (58) and an end portion of the fourth light-receiving region (58) farther from the third light-receiving region (57) in the second direction (F) is greater than a dimension, in the second direction (F), of light that is emitted from the emitter (40) and, after being incident on the annular region (26), irradiates the third light-receiving region (57) and the fourth light-receiving region (58).

12. The encoder (10) according to claim 11,

wherein the emitter (40) includes a point light source, and

expressions below are satisfied:

$$W2 = (h2/h1) \times W1$$

$$W2/L < 1$$

where h1 denotes a dimension between the annular region (26) and the emitter (40) in an axis direction in which the rotation axis (A) extends,

h2 denotes a dimension between the annular region (26) and the first and the second light-receiving regions (55, 56) in the axis direction in which the rotation axis (A) extends,

L denotes the dimension between the end portion of the first light-receiving region (55) farther from the second light-receiving region (56) and the end portion of the second light-receiving region (56) farther from the first light-receiving region (55) in the first direction (E),

W1 denotes a dimension of the annular region (26) in the first direction (E), and

W2 denotes a dimension, in the first direction (E), of light that is emitted from the point light source and, after being incident on the annular region (26), irradiates the first light-receiving region (55) and the second light-receiving region (56).

13. The encoder (10) according to claim 11,

wherein the emitter (40) includes a surface light source, and
expressions below are satisfied:

$$W2 = ((h2/h1) + 1) \times W1 + h2/h1 \times D$$

$$W2/L < 1$$

where h1 denotes a dimension between the annular region (26) and the emitter (40) in an axis direction in which the rotation axis (A) extends,

h2 denotes a dimension between the annular region (26) and the first and the second light-receiving regions (55, 56) in the axis direction in which the rotation axis (A) extends,

L denotes the dimension between the end portion of the first light-receiving region (55) farther from the second light-receiving region (56) and the end portion of the second light-receiving region (56) farther from the first light-receiving region (55) in the first direction (E),

W1 denotes a dimension of the annular region (26) in the first direction (E),

W2 denotes a dimension, in the first direction (E), of light that is emitted from the surface light source and, after being incident on the annular region (26), irradiates the first light-receiving region (55) and the second light-receiving region (56), and

D denotes a dimension of a light emission port of the surface light source in the first direction (E).

14. The encoder (10) according to any one of claims 1 to 3,
wherein the annular region (26) is recessed in an axis direction in which the rotation axis (A) extends.

15. An attachment method of attaching an encoder (10) to a detection target,

wherein the encoder (10) includes the encoder according to claim 1,
the attachment method comprising:

attaching the rotary plate (20) to the detection target; and
after the attaching, causing the outputter (60) to output the signal indicating the value of X and the signal indicating the value of Y,
wherein in the attaching, the rotary plate (20) is attached to the detection target at a position where the value of X indicated by the signal output by the outputter (60) becomes 0 and the value of Y indicated by the signal output by the outputter (60) becomes 0.

**Patentansprüche**

1. Codierer (10), umfassend: einen Emitter (40), der Licht emittiert; eine Drehplatte (20), die sich dreht und einen Ringbereich (26) umfasst, der das von dem Emitter (40) emittierte Licht reflektiert oder durchlässt, wobei der Ringbereich (26) um eine Drehachse (A) der Drehplatte (20) herum vorgesehen ist; und einen Lichtempfänger (50), der von dem Emitter (40) emittiertes und über den Ringbereich (26) ankommendes Licht empfängt, wobei der Lichtempfänger (50) umfasst: einen ersten Satz, der einen ersten Lichtempfangsbereich (55) und einen zweiten Lichtempfangsbereich (56) umfasst, die in einer ersten Richtung (E), die eine Drehrichtung (C) der Drehplatte (20) schneidet, nebeneinander angeordnet sind; und einen zweiten Satz, der einen dritten Lichtempfangsbereich (57) und einen vierten Lichtempfangsbereich (58) umfasst, die in einer zweiten Richtung (F), die die Drehrichtung (C) schneidet, nebeneinander angeordnet sind und der in der Drehrichtung (C) neben dem ersten Satz vorgesehen ist **dadurch gekennzeichnet, dass** der Codierer ferner umfasst: einen Ausgeber (60), der ein Signal ausgibt, das einen Wert von X angibt, der wie folgt ausgedrückt wird, und ein Signal, das einen Wert von Y angibt, der wie folgt ausgedrückt wird: X = (A1 + B2) - (B1 + A2) Y = (A1 + B1) - (A2 + B2) wobei A1 einen Signalwert bezeichnet, der dem von dem ersten Lichtempfangsbereich (55) empfangenen Licht entspricht, A2 einen Signalwert bezeichnet, der dem von dem zweiten Lichtempfangsbereich (56) empfangenen Licht entspricht, B1 einen Signalwert bezeichnet, der dem von dem dritten Lichtempfangsbereich (57) empfangenen Licht entspricht, und B2 einen Signalwert bezeichnet, der dem von dem vierten Lichtempfangsbereich (58) empfangenen Licht entspricht, die erste Richtung (E) eine Richtung ist, die mit einer radialen Richtung um die Drehachse (A) zusammenfällt, und die zweite Richtung (F) eine Richtung ist, die mit der radialen Richtung um die Drehachse (A) zusammenfällt.

2. Codierer (10) nach Anspruch 1, wobei der Ausgeber (60) ein Signal ausgibt, das einen Wert von Q angibt, der wie folgt ausgedrückt wird: Q = A1 + B1 + A2 + B2.

3. Codierer (10) nach Anspruch 2, wobei der Ausgeber (60) ein Signal ausgibt, das einen Wert von X1 angibt, der wie folgt ausgedrückt wird, und ein Signal, das einen Wert von Y1 angibt, der wie folgt ausgedrückt wird: X1 = X/Q Y1 = Y/Q.

4. Codierer (10) nach einem der Ansprüche 1 bis 3, wobei die Drehplatte (20) ein oder mehrere Muster zum Erfassen eines Drehwinkels der Drehplatte (20) umfasst, der Lichtempfänger (50) einen oder mehrere Lichtempfangsbereiche umfasst, die von dem Emitter (40) emittiertes und über das eine oder die mehreren Muster ankommendes Licht empfangen, der Codierer (10) ferner umfasst: einen Rechner (70), der einen Wert von P1 berechnet, der wie folgt ausgedrückt wird: $P1 = P + \tan^{-1}(\Delta r \times \sin\Phi/r)$ oder $P1 = P - \tan^{-1}(\Delta r \times \sin\Phi/r)$ wobei P einen Drehwinkel der Drehplatte (20) bezeichnet, der basierend auf dem von dem Emitter (40) emittierten und, nachdem es auf das eine oder die mehreren Muster aufgetroffen ist, von dem einen oder den mehreren Lichtempfangsbereichen (55, 56, 57, 58) empfangenen Licht erfasst wird, $\Delta r$ eine Exzentrizitätsmenge einer Achse des Ringbereichs (26) relativ zur Drehachse (A) bezeichnet, $\Phi$ eine Exzentrizitätsphase der Achse relativ zur Drehachse (A) bezeichnet, und r einen Radius des Ringbereichs (26) bezeichnet, und der Ausgeber (60) ein Signal ausgibt, das den von dem Rechner (70) berechneten Wert von P1 angibt.

5. Codierer (10) nach einem der Ansprüche 1 bis 3, wobei der Emitter (40) in der Drehrichtung (C) zwischen dem ersten Satz und dem zweiten Satz angeordnet ist.

6. Codierer (10) nach einem der Ansprüche 1 bis 3, wobei jeder des ersten Satzes und des zweiten Satzes in einer radialen Richtung um die Drehachse (A) nach innen von dem Emitter (40) angeordnet ist.

7. Codierer (10) nach einem der Ansprüche 1 bis 3, wobei ein Endabschnitt des ersten Lichtempfangsbereichs (55) näher an dem zweiten Lichtempfangsbereich (56), ein Endabschnitt des zweiten Lichtempfangsbereichs (56) näher an dem ersten Lichtempfangsbereich (55), ein Endabschnitt des dritten Lichtempfangsbereichs (57) näher an dem vierten Lichtempfangsbereich (58) und ein Endabschnitt des vierten Lichtempfangsbereichs (58) näher an dem dritten Lichtempfangsbereich (57) jeweils die Form einer gekrümmten Linie haben, die sich in der Drehrichtung (C) erstreckt.

8. Codierer (10) nach einem der Ansprüche 1 bis 3, wobei ein Endabschnitt des ersten Lichtempfangsbereichs (55) näher an dem zweiten Lichtempfangsbereich (56), ein Endabschnitt des zweiten Lichtempfangsbereichs (56) näher an dem ersten Lichtempfangsbereich (55), ein Endabschnitt des dritten Lichtempfangsbereichs (57) näher an dem vierten Lichtempfangsbereich (58) und ein Endabschnitt des vierten Lichtempfangsbereichs (58) näher an dem dritten Lichtempfangsbereich (57) jeweils die Form einer geraden Linie haben, die sich in einer tangentialen Richtung in Bezug auf die Drehrichtung (C) erstreckt.

9. Codierer (10) nach einem der Ansprüche 1 bis 3, wobei jede der ersten Richtung (E) und der zweiten Richtung (F) eine Richtung parallel zu einer geraden Linie (G) ist, die orthogonal zur Drehachse (A) ist, und der erste Satz und der zweite Satz liniensymmetrisch in Bezug auf die gerade Linie (G) vorgesehen sind.

10. Codierer (10) nach einem der Ansprüche 1 bis 3, wobei die zweite Richtung (F) die erste Richtung (E) schneidet.

11. Codierer (10) nach einem der Ansprüche 1 bis 3, wobei eine Abmessung zwischen einem Endabschnitt des ersten Lichtempfangsbereichs (55) weiter entfernt von dem zweiten Lichtempfangsbereich (56) und einem Endabschnitt des zweiten Lichtempfangsbereichs (56) weiter entfernt von dem ersten Lichtempfangsbereich (55) in der ersten Richtung (E) größer ist als eine Abmessung in der ersten Richtung (E) von Licht, das von dem Emitter (40) emittiert wird und, nachdem es auf den Ringbereich (26) aufgetroffen ist, den ersten Lichtempfangsbereich (55) und den zweiten Lichtempfangsbereich (56) bestrahlt, und eine Abmessung zwischen einem Endabschnitt des dritten Lichtempfangsbereichs (57) weiter entfernt von dem vierten Lichtempfangsbereich (58) und einem Endabschnitt des vierten Lichtempfangsbereichs (58) weiter entfernt von dem dritten Lichtempfangsbereich (57) in der zweiten Richtung (F) größer ist als eine Abmessung in der zweiten Richtung (F) von Licht, das von dem Emitter (40) emittiert wird und, nachdem es auf den Ringbereich (26) aufgetroffen ist, den dritten Lichtempfangsbereich (57) und den vierten Lichtempfangsbereich (58) bestrahlt.

12. Codierer (10) nach Anspruch 11, wobei der Emitter (40) eine Punktlichtquelle umfasst und die folgenden Ausdrücke erfüllt sind: $W2 = (h2/h1) \times W1$ $W2/L < 1$ wobei h1 eine Abmessung zwischen dem Ringbereich (26) und dem Emitter (40) in einer Achsenrichtung bezeichnet, in der sich die Drehachse (A) erstreckt, h2 eine Abmessung zwischen dem Ringbereich (26) und dem ersten und zweiten Lichtempfangsbereich (55, 56) in der Achsenrichtung bezeichnet, in der sich die Drehachse (A) erstreckt, L die Abmessung zwischen dem Endabschnitt des ersten Lichtempfangsbereichs (55) weiter entfernt von dem zweiten Lichtempfangsbereich (56) und dem Endabschnitt des zweiten Lichtempfangsbereichs (56) weiter entfernt von dem ersten Lichtempfangsbereich (55) in der ersten Richtung (E) bezeichnet, W1 eine Abmessung des Ringbereichs (26) in der ersten Richtung (E) bezeichnet, und W2 eine Abmessung in der ersten Richtung (E) von Licht bezeichnet, das von der Punktlichtquelle emittiert wird und, nachdem es auf den Ringbereich (26) aufgetroffen ist, den ersten Lichtempfangsbereich (55) und den zweiten Lichtempfangsbereich (56) bestrahlt.

13. Codierer (10) nach Anspruch 11, wobei der Emitter (40) eine Flächenlichtquelle umfasst und die folgenden Ausdrücke erfüllt sind: $W2 = ((h2/h1) + 1) \times W1 + h2/h1 \times D$ $W2/L < 1$ wobei h1 eine Abmessung zwischen dem Ringbereich (26) und dem Emitter (40) in einer Achsenrichtung bezeichnet, in der sich die Drehachse (A) erstreckt, h2 eine Abmessung zwischen dem Ringbereich (26) und dem ersten und zweiten Lichtempfangsbereich (55, 56) in der Achsenrichtung bezeichnet, in der sich die Drehachse (A) erstreckt, L die Abmessung zwischen dem Endabschnitt des ersten Lichtempfangsbereichs (55) weiter entfernt von dem zweiten Lichtempfangsbereich (56) und dem Endabschnitt des zweiten Lichtempfangsbereichs (56) weiter entfernt von dem ersten Lichtempfangsbereich (55) in der ersten Richtung (E) bezeichnet, W1 eine Abmessung des Ringbereichs (26) in der ersten Richtung (E) bezeichnet, W2 eine Abmessung in der ersten Richtung (E) von Licht bezeichnet, das von der Flächenlichtquelle emittiert wird und, nachdem es auf den Ringbereich (26) aufgetroffen ist, den ersten Lichtempfangsbereich (55) und den zweiten Lichtempfangsbereich (56) bestrahlt, und D eine Abmessung einer Lichtemissionsöffnung der Flächenlichtquelle in der ersten Richtung (E) bezeichnet.

14. Codierer (10) nach einem der Ansprüche 1 bis 3, wobei der Ringbereich (26) in einer Achsenrichtung, in der sich die Drehachse (A) erstreckt, zurückgesetzt ist.

15. Befestigungsverfahren zum Befestigen eines Codierers (10) an einem Erfassungsziel, wobei der Codierer (10) den Codierer nach Anspruch 1 umfasst, das Befestigungsverfahren umfassend: Befestigen der Drehplatte (20) an dem Erfassungsziel; und nach dem Befestigen, Veranlassen des Ausgebers (60), das Signal auszugeben, das den Wert von X angibt, und das Signal, das den Wert von Y angibt, wobei beim Befestigen die Drehplatte (20) an dem Erfassungsziel an einer Position befestigt wird, an der der Wert von X, der durch das von dem Ausgeber (60) ausgegebene Signal angegeben wird, 0 wird und der Wert von Y, der durch das von dem Ausgeber (60) ausgegebene Signal angegeben wird, 0 wird.

**Revendications**

1. Codeur (10) comprenant : un émetteur (40) qui émet de la lumière ; une plaque rotative (20) qui tourne et comprend une région annulaire (26) qui réfléchit ou transmet la lumière émise par l'émetteur (40), la région annulaire (26) étant disposée autour d'un axe de rotation (A) de la plaque rotative (20) ; et un récepteur de lumière (50) qui reçoit la lumière émise par l'émetteur (40) et arrivant via la région annulaire (26), dans lequel le récepteur de lumière (50) comprend : un premier ensemble qui comprend une première région de réception de lumière (55) et une deuxième région de réception de lumière (56) qui sont disposées côte à côte dans une première direction (E) croisant une direction de rotation (C) de la plaque rotative (20) ; et un deuxième ensemble qui comprend une troisième région de réception de lumière (57) et une quatrième région de réception de lumière (58) qui sont disposées côte à côte dans une deuxième direction (F) croisant la direction de rotation (C) et qui est disposé côte à côte avec le premier ensemble dans la direction de rotation (C) **caractérisé en ce que** le codeur comprend en outre : un dispositif de sortie (60) qui délivre un signal indiquant une valeur de X exprimée comme ci-dessous et un signal indiquant une valeur de Y exprimée comme ci-dessous : X = (A1 + B2) - (B1 + A2) Y = (A1 + B1) - (A2 + B2) où A1 désigne une valeur de signal correspondant à la lumière reçue par la première région de réception de lumière (55), A2 désigne une valeur de signal correspondant à la lumière reçue par la deuxième région de réception de lumière (56), B1 désigne une valeur de signal correspondant à la lumière reçue par la troisième région de réception de lumière (57), et B2 désigne une valeur de signal correspondant à la lumière reçue par la quatrième région de réception de lumière (58), la première direction (E) est une direction qui coïncide avec une direction radiale autour de l'axe de rotation (A), et la deuxième direction (F) est une direction qui coïncide avec la direction radiale autour de l'axe de rotation (A) .

2. Codeur (10) selon la revendication 1, dans lequel le dispositif de sortie (60) délivre un signal indiquant une valeur de Q exprimée comme ci-dessous : Q = A1 + B1 + A2 + B2.

3. Codeur (10) selon la revendication 2, dans lequel le dispositif de sortie (60) délivre un signal indiquant une valeur de X1 exprimée comme ci-dessous et un signal indiquant une valeur de Y1 exprimée comme ci-dessous : X1 = X/Q Y1 = Y/Q.

4. Codeur (10) selon l'une quelconque des revendications 1 à 3, dans lequel la plaque rotative (20) comprend un ou plusieurs motifs pour détecter un angle de rotation de la plaque rotative (20), le récepteur de lumière (50) comprend une ou plusieurs régions de réception de lumière qui reçoivent la lumière émise par l'émetteur (40) et arrivant via le ou les motifs, le codeur (10) comprend en outre : un calculateur (70) qui calcule une valeur de P1 exprimée comme ci-dessous : $P1 = P + \tan^{-1} (\Delta r \times \sin\Phi/r)$ ou $P1 = P - \tan^{-1} (\Delta r \times \sin\Phi/r)$ où P désigne un angle de rotation de la plaque rotative (20) détecté sur la base de la lumière émise par l'émetteur (40) et, après avoir été incidente sur le ou les motifs, reçue par la ou les régions de réception de lumière (55, 56, 57, 58), $\Delta r$ désigne une quantité d'excentricité d'un axe de la région annulaire (26) par rapport à l'axe de rotation (A), $\Phi$ désigne une phase d'excentricité de l'axe par rapport à l'axe de rotation (A), et r désigne un rayon de la région annulaire (26), et le dispositif de sortie (60) délivre un signal indiquant la valeur de P1 calculée par le calculateur (70).

5. Codeur (10) selon l'une quelconque des revendications 1 à 3, dans lequel l'émetteur (40) est interposé entre le premier ensemble et le deuxième ensemble dans la direction de rotation (C).

6. Codeur (10) selon l'une quelconque des revendications 1 à 3, dans lequel chacun du premier ensemble et du deuxième ensemble est situé vers l'intérieur de l'émetteur (40) dans une direction radiale autour de l'axe de rotation (A).

7. Codeur (10) selon l'une quelconque des revendications 1 à 3, dans lequel une partie d'extrémité de la première région de réception de lumière (55) plus proche de la deuxième région de réception de lumière (56), une partie d'extrémité de la deuxième région de réception de lumière (56) plus proche de la première région de réception de lumière (55), une partie d'extrémité de la troisième région de réception de lumière (57) plus proche de la quatrième région de réception de lumière (58), et une partie d'extrémité de la quatrième région de réception de lumière (58) plus proche de la troisième région de réception de lumière (57) ont chacune une forme de ligne courbe s'étendant dans la direction de rotation (C).

8. Codeur (10) selon l'une quelconque des revendications 1 à 3, dans lequel une partie d'extrémité de la première région de réception de lumière (55) plus proche de la deuxième région de réception de lumière (56), une partie d'extrémité de la deuxième région de réception de lumière (56) plus proche de la première région de réception de lumière (55), une partie d'extrémité de la troisième région de réception de lumière (57) plus proche de la quatrième région de réception

## EP 4 459 236 B1

de lumière (58), et une partie d'extrémité de la quatrième région de réception de lumière (58) plus proche de la troisième région de réception de lumière (57) ont chacune une forme de ligne droite s'étendant dans une direction tangentielle par rapport à la direction de rotation (C).

9.  Codeur (10) selon l'une quelconque des revendications 1 à 3, dans lequel chacune de la première direction (E) et de la deuxième direction (F) est une direction parallèle à une ligne droite (G) orthogonale à l'axe de rotation (A), et le premier ensemble et le deuxième ensemble sont disposés symétriquement par rapport à la ligne droite (G).

10. Codeur (10) selon l'une quelconque des revendications 1 à 3, dans lequel la deuxième direction (F) croise la première direction (E).

11. Codeur (10) selon l'une quelconque des revendications 1 à 3, dans lequel une dimension entre une partie d'extrémité de la première région de réception de lumière (55) plus éloignée de la deuxième région de réception de lumière (56) et une partie d'extrémité de la deuxième région de réception de lumière (56) plus éloignée de la première région de réception de lumière (55) dans la première direction (E) est supérieure à une dimension, dans la première direction (E), de la lumière émise par l'émetteur (40) et, après avoir été incidente sur la région annulaire (26), irradiant la première région de réception de lumière (55) et la deuxième région de réception de lumière (56), et une dimension entre une partie d'extrémité de la troisième région de réception de lumière (57) plus éloignée de la quatrième région de réception de lumière (58) et une partie d'extrémité de la quatrième région de réception de lumière (58) plus éloignée de la troisième région de réception de lumière (57) dans la deuxième direction (F) est supérieure à une dimension, dans la deuxième direction (F), de la lumière émise par l'émetteur (40) et, après avoir été incidente sur la région annulaire (26), irradiant la troisième région de réception de lumière (57) et la quatrième région de réception de lumière (58).

12. Codeur (10) selon la revendication 11, dans lequel l'émetteur (40) comprend une source lumineuse ponctuelle, et les expressions ci-dessous sont satisfaites : W2 = (h2/h1) × W1 W2/L < 1 où h1 désigne une dimension entre la région annulaire (26) et l'émetteur (40) dans une direction axiale dans laquelle l'axe de rotation (A) s'étend, h2 désigne une dimension entre la région annulaire (26) et les première et deuxième régions de réception de lumière (55, 56) dans la direction axiale dans laquelle l'axe de rotation (A) s'étend, L désigne la dimension entre la partie d'extrémité de la première région de réception de lumière (55) plus éloignée de la deuxième région de réception de lumière (56) et la partie d'extrémité de la deuxième région de réception de lumière (56) plus éloignée de la première région de réception de lumière (55) dans la première direction (E), W1 désigne une dimension de la région annulaire (26) dans la première direction (E), et W2 désigne une dimension, dans la première direction (E), de la lumière émise par la source lumineuse ponctuelle et, après avoir été incidente sur la région annulaire (26), irradiant la première région de réception de lumière (55) et la deuxième région de réception de lumière (56).

13. Codeur (10) selon la revendication 11, dans lequel l'émetteur (40) comprend une source lumineuse surfacique, et les expressions ci-dessous sont satisfaites : W2 = ((h2/h1) + 1) × W1 + h2/h1 × D W2/L < 1 où h1 désigne une dimension entre la région annulaire (26) et l'émetteur (40) dans une direction axiale dans laquelle l'axe de rotation (A) s'étend, h2 désigne une dimension entre la région annulaire (26) et les première et deuxième régions de réception de lumière (55, 56) dans la direction axiale dans laquelle l'axe de rotation (A) s'étend, L désigne la dimension entre la partie d'extrémité de la première région de réception de lumière (55) plus éloignée de la deuxième région de réception de lumière (56) et la partie d'extrémité de la deuxième région de réception de lumière (56) plus éloignée de la première région de réception de lumière (55) dans la première direction (E), W1 désigne une dimension de la région annulaire (26) dans la première direction (E), W2 désigne une dimension, dans la première direction (E), de la lumière émise par la source lumineuse surfacique et, après avoir été incidente sur la région annulaire (26), irradiant la première région de réception de lumière (55) et la deuxième région de réception de lumière (56), et D désigne une dimension d'un orifice d'émission de lumière de la source lumineuse surfacique dans la première direction (E).

14. Codeur (10) selon l'une quelconque des revendications 1 à 3, dans lequel la région annulaire (26) est en retrait dans une direction axiale dans laquelle l'axe de rotation (A) s'étend.

15. Procédé de fixation pour fixer un codeur (10) à une cible de détection, dans lequel le codeur (10) comprend le codeur selon la revendication 1, le procédé de fixation comprenant : la fixation de la plaque rotative (20) à la cible de détection ; et après la fixation, le fait d'amener le dispositif de sortie (60) à délivrer le signal indiquant la valeur de X et le signal indiquant la valeur de Y, dans lequel, lors de la fixation, la plaque rotative (20) est fixée à la cible de détection à une position où la valeur de X indiquée par le signal délivré par le dispositif de sortie (60) devient 0 et la valeur de Y indiquée par le signal délivré par le dispositif de sortie (60) devient 0.

# FIG. 1

FIG. 2

# FIG. 3

# FIG. 4

FIG. 5

EP 4 459 236 B1

FIG. 6

# FIG. 7

EP 4 459 236 B1

# FIG. 8

—— First signal (Shift in X-axis direction)

--- Second signal (Shift in Y-axis direction)

# FIG. 9

Start

Match amplitude of first signal and amplitude of second signal — S1

Determine eccentric phase and eccentric amount — S2

Calculate angle — S3

End

FIG. 10

FIG. 11

# FIG. 12

# FIG. 13

# FIG. 14

# FIG. 15

# FIG. 16

# FIG. 17

# FIG. 18

```
                    ( Start )
                        |
                        v
        ┌───────────────────────────┐
        │   Attach rotary plate     │── S21
        │   to detection target     │
        └───────────────────────────┘
                        |
                        v
        ┌───────────────────────────┐
        │   Rotate rotary           │── S22
        │   plate                   │
        └───────────────────────────┘
                        |
                        v
        ┌───────────────────────────┐
        │   Obtain signal           │
        │   output by               │── S23
        │   outputter               │
        └───────────────────────────┘
                        |
                        v
                       S24
                    ╱  Each  ╲
                 ╱ of value of X ╲        No
                ⟨ and value of Y is ⟩─────────┐
                 ╲      0?       ╱            │
                    ╲         ╱               v
                        │          ┌───────────────────────────┐
                      Yes          │   Adjust attachment        │
                        │          │   position of rotary       │── S25
                        │          │   plate attached to        │
                        │          │   detection target         │
                        │          └───────────────────────────┘
                        v
                    ( End )
```

**EP 4 459 236 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07140844 A
- US 2012206024 A1